# EUROPEAN PATENT APPLICATION

(11) **EP 4 270 240 A1**
(43) Date of publication of application: **01.11.2023**
(21) Application number: 21909305.1
(22) Date of filing: 20.12.2021
(51) Int. Cl.: G06F 40/58

(54) **CLOUD TRANSLATION CALLING METHOD, APPARATUS AND SYSTEM**

(30) Priority: 22.12.2020 CN 202011524387
(71) Applicant: Zhang, Longbu, Beijing 100085 (CN)
(72) Inventor: XU, Rongjun, Beijing 100085 (CN); SHANG, Qiang, Beijing 100085 (CN); ZHANG, Longbu, Beijing 100085 (CN)
(74) Representative: Bals & Vogel Patentanwälte PartGmbB
(86) International application number: PCT/CN2021/139452
(87) International publication number: WO 2022/135309

(57) **Abstract**

A cloud translation calling method, comprising: receiving or obtaining content to be translated; calling the cloud translation service according to the cloud translation calling information; obtaining and/or displaying the results of cloud translation services; wherein, the cloud translation calling information is a cloud translation calling information provided by a third party; or the cloud translation calling information comprises basic information and additional information; or the cloud translation calling information includes information that can be used to call one or more cloud translation services. A cloud translation calling device, configured to call cloud translation service according to cloud translation calling information; or include a cloud translation module, which is configured to call the cloud translation service according to the cloud translation calling information. Further, using the cloud translation calling information provided by the third party to directly call the cloud translation service from the cloud translation provider, and call multiple cloud translation services at the same time. The present invention also includes a related method and server for providing cloud translation calling information, and a system for calling cloud translation.

## Description

### Technical Field

The present application relates to the technical field of computer translation, in particular to a method, device and system for calling cloud translation, as well as a related method, client, server for providing cloud translation calling information, and system for calling cloud translation.

### Background Technique

With the vigorous development of computer translation technology, artificial intelligence and deep learning technology, computer translation software and tools have also been developed. Wherein, the computer-aided translation (Computer Aided Translation, CAT) software system can help translators complete translation work with high quality, efficiency and ease. In addition, especially in recent years, the translation quality of online translation engines based on neural networks has been greatly improved, providing great convenience for translation work, and gradually changing people's translation habits, from the original manual translation to post-translation editing .

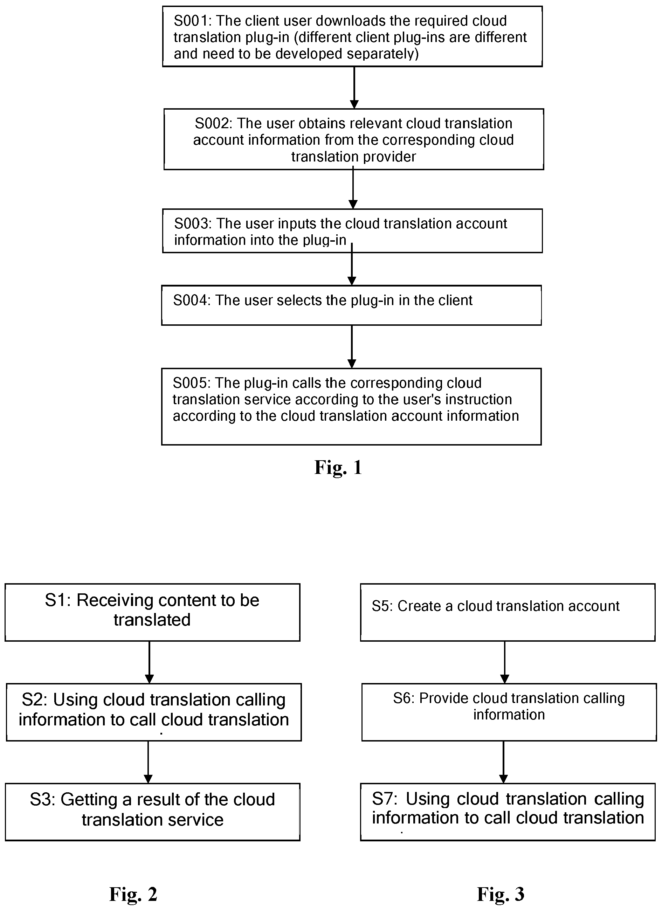

At present, many online translation websites have emerged, such as "Aitrans Online", "Google", "Baidu", "Kezhuan Xiaofei" and so on. These online translation websites or platforms use their own translation engines to provide instant online translation services, which is the so-called cloud translation. These online translation websites or platforms usually use cloud computing technology, with one or more servers providing translation engines (technology and processing). The specific ways for providing cloud translation are: web page method and API calling method, which are described in detail as follows:
1. The method of online web page translation, that is, the content to be translated needs to be copied and pasted into the content input area of the web page, and the operation is performed according to the regulations of the web page to obtain the online translation result. Since the content input area of the web page does not support long paragraphs of text, the length of the translation content is limited. Therefore, when translating a long article, this method requires the user to perform multiple operations such as selecting the original text, pasting the original text, copying the translated text, and pasting the translated text. There are many manual steps, and because it is necessary to switch operations between different applications (programs), there are problems such as complicated process and low translation efficiency.
2. Application programming interface (API) calling method, see Figure 1 for details. This online method is more direct and the length of the translation content is usually relatively large, which can basically meet various translation needs. However, this method needs to develop a cloud translation module or plug-in for a certain (certain) application (program) according to the API requirements of a certain cloud translation engine. For ordinary translators or users, this kind of development work is almost impossible, and they can only be used after waiting for other parties (people) to develop. And because this method usually requires a fee, it requires users to register with the above-mentioned cloud translation provider (such as its official website) before using the application (program) with the above-mentioned cloud translation module or plug-in (fill in user information , pay or provide bank card or other fund account information for deduction, etc.), get relevant cloud translation account information (such as account name and/or account password, etc.), and then input it into the application (program) or plug-in , to call the online translation engine to complete the online translation purpose. This kind of operation or procedure is also difficult for ordinary users, because in addition to obtaining plug-ins, it also takes a lot of time to find relevant cloud translation information, register and pay, and enter relevant information. Especially when the user needs to use multiple online translation engines for translation, this operation method requires the user to perform multiple operations such as user registration and account information input, which consumes a lot of user time and cost, so there is a problem of poor user experience.

In addition, when calling cloud translation in the form of plug-ins, only one cloud translation API plug-in can be enabled for each call, and multiple cloud translation services cannot be called at the same time.

Some existing computer-aided translation software (CAT) provides this kind of plug-in function, and the plug-in is downloaded, installed and registered by the user himself, and the user pays to the cloud translation provider after use. When users want to call multiple cloud translation services, they need to repeat the above process and steps separately, and need to pay each cloud translation provider separately. Very inconvenient to use and poor user-friendliness. Moreover, only one cloud translation API plug-in can be enabled for each call, and multiple cloud translation services cannot be called at the same time. There is no coordination mechanism between various plug-ins, and it is impossible to set them uniformly by users.

### Summary

Because there are many above-mentioned problems in the prior art, it is necessary to innovate the art. The disclosure is to provide a novel method, device and system for calling cloud translation services. The present application also includes a server, a client or a terminal device for calling the cloud translation service.

The cloud translation calling method according to one aspect of the present application comprises:
receiving or obtaining content to be translated; calling a cloud translation service based on cloud translation calling information or part of the information; the cloud translation calling information or part of the information is cloud translation calling information or part of the information provided by a cloud translation calling information provider or a third party; alternatively, the cloud translation calling information comprises basic information, and further comprises additional information; alternatively, the cloud translation calling information or part of the information is used to call one or more cloud translation services or includes information used to call one or more cloud translation services.

According to the cloud translation calling method of some embodiments of the present application, wherein, the cloud translation calling information provider or the third party is any party other than the user party calling cloud translation and the cloud translation provider; wherein, the calling cloud translation service is directly calling cloud translation service; further, the calling cloud translation service is directly calling cloud translation service from a cloud translation provider; wherein, the cloud translation calling information or part of the information is preset; wherein, the method further includes receiving or acquiring cloud translation calling information; further, the receiving or obtaining cloud translation calling information means obtaining cloud translation calling information or part of it from a third party, or receiving cloud translation calling information or part of it provided by a third party; wherein, the basic information includes information for calling cloud translation from a cloud translation provider, and the additional information includes information for management; further, the additional information includes fund information or fund balance information of a client or terminal or user; wherein, the cloud translation calling information or part of the information is provided with encryption; wherein, the calling cloud translation service is calling multiple cloud translation services; wherein, the cloud translation calling information or part of the information used to call multiple cloud translation services is packaged and provided together; wherein, the method further includes: receiving a result of the cloud translation service wherein, the plurality of cloud translation services are selected and prioritized by the user; further, call the selected cloud translation service according to the priority order, and/or display the calling results of the selected cloud translation services according to the priority order; wherein, the basic information includes a unit price of cloud translation, which is used to charge for calling cloud translation; wherein, the calling cloud translation is billed on a per-time basis or in batches; further wherein, the amount of the billing result is subtracted from the user's fund balance; further, the billing is based on the cloud translation unit price and the amount of cloud translation content; wherein, a decision is made according to the user's fund balance before calling cloud translation; further, the decision-making includes judging whether the fund balance of the client or terminal or user is greater than or equal to the amount required for the current calling according to the current content to be translated, and if so, the calling is made, otherwise, the calling is not made; further, wherein, when calling multiple cloud translation services at the same time, the decision-making includes judging whether the client or terminal or user fund balance is greater than or equal to the amount of funds required for calling one or more cloud translation services in the multiple cloud translation services according to the current content to be translated; if so, making the call to said one or more cloud translation services, otherwise not making said call; further, the client or terminal or user fund balance information is preset, or obtained through input, or obtained through downloading; further, the user fund balance information is encrypted; further, the user fund balance information is included in the cloud translation calling information; wherein, the basic information further comprises: name of cloud translation provider, website of cloud translation, account name of cloud translation, account code of cloud translation, password of cloud translation, unit price of cloud translation, or part of them; The additional information comprises registration information, fund information, status information of the user account, or part of the information; wherein, the user account is a user account at a third party; further, one user account can register multiple fund accounts; further, one user account can register the information of multiple clients or terminals; further, a user account or a fund account or a client or terminal can be used to call one or more cloud translation services; wherein, the content and data of calling cloud translation, the billing result information, the user fund balance information, upload information, or part of the information are recorded each time or in batches;

According to the cloud translation calling method of some embodiments of the present application, wherein, the method is applied to a client or a terminal; further, the cloud translation calling information or part of the information is preset in the client or terminal; Alternatively, the cloud translation calling information or part of the information is input into the client or terminal by the user; Alternatively, the cloud translation calling information or part of the information is download into the client or terminal by the user; further, the user fund balance information is preset in the client or terminal, or input into the client or terminal by the user, or downloaded from the server to the client or terminal;

According to the cloud translation calling method of some embodiments of the present application, wherein, the cloud translation calling information or part of the information is download from a server; further, the server is a third-party server; wherein, the relevant information of the one or more cloud translation services is updated and provided by the third party or the third party server; further, the relevant information of the one or more cloud translation services is viewed, selected and/or entered by the user, or downloaded by the client or terminal, and is further available for the user to perform the selection and setting; wherein, the information, content and data of calling cloud translation, the billing result, the user fund balance information, or part of the information are upload to the server each time or in batches; wherein, the server transmits the user fund balance recorded and updated therein to the client or terminal; wherein, the method is applied to a client or a terminal;

The device for calling cloud translation according to one aspect of the present application uses the above-mentioned method for calling cloud translation.

According to the cloud translation calling device in one aspect of the present application, the cloud translation calling device calls the cloud translation service according to the cloud translation calling information or part of the information; Alternatively, the cloud translation calling device includes a cloud translation module, and the cloud translation module calls the cloud translation service according to the cloud translation calling information or part of the information; wherein, the cloud translation calling information is cloud translation calling information provided by the cloud translation calling information provider or a third party; alternatively, the cloud translation calling information includes basic information, and further includes additional information; alternatively, the cloud translation calling information or part of the information is used to call one or more cloud translation services or includes information used to call one or more cloud translation services.

According to the cloud translation calling device in some embodiments of the present application, wherein, further the cloud translation calling device includes a cloud translation interface sub-module, and the cloud translation interface sub-module calls the cloud translation service according to the cloud translation calling information or part of the information; further, the cloud translation calling device or the cloud translation module or the cloud translation interface sub-module directly calls the cloud translation service or directly calls the cloud translation service from a cloud translation provider according to the cloud translation calling information or part of the information provided by the cloud translation calling information provider or a third party; and receiving a result of the cloud translation service; further wherein, the cloud translation calling device or the cloud translation module directly calls multiple cloud translation services at the same time; further, it includes receiving or acquiring means for receiving or acquiring the content to be translated; further, the device is a translation software, an auxiliary translation software, an application program, a module embedded in application, a client, a terminal device, an electronic device, or a module device integrated into other devices; wherein, the cloud translation calling device or the cloud translation module acquires cloud translation calling information; further, obtain cloud translation calling information from a third party or obtain cloud translation calling information from a third party;

According to the cloud translation calling device in some embodiments of the present application, wherein, the cloud translation module is preset in the cloud translation calling device, or downloaded by the user, or downloaded from the server by the device; further, the cloud translation calling information includes basic information and additional information, wherein, the basic information includes information for calling cloud translation from a cloud translation provider, and the additional information includes information for management; further, the cloud translation calling information may be one cloud translation calling information, or may include multiple cloud translation calling information; alternatively, the cloud translation calling information or part of the information is used to call one or more cloud translation services or includes information used to call one or more cloud translation services. The basic information may include: name of cloud translation provider, website of cloud translation, account name of cloud translation, user code of cloud translation, password of cloud translation, unit price of cloud translation, or part of them; The additional information includes registration information, fund information, status information of the user account, or part of the information; wherein, the user account is a user account at a third party; further wherein, one user account can register multiple fund accounts; further, one user account can register the information of multiple cloud translation calling devices; further wherein, a user account or a fund account or a cloud translation calling devices can be used to call one or more cloud translation services; further, the cloud translation calling information or part of the information is pre-set in the device or the cloud translation module or the cloud translation interface sub-module, or is obtained by the user from a third party and input into the device or the cloud translation module or the cloud translation interface sub-module; or downloaded from the server by the device or the cloud translation module or the cloud translation interface sub-module; further wherein, comprising a decryption module, which is used to decrypt the cloud translation calling information or part of the information; wherein, further comprising a parsing module for parsing the cloud translation calling information; wherein, further comprising a setting module, which is used to select multiple cloud translation services and set priorities; further, it is used to set the device or the cloud translation module to call the selected cloud translation service according to the priority order, and/or display the calling result of the selected cloud translation service according to the priority order; further, the cloud translation module includes one or more cloud translation interface sub-modules for calling corresponding cloud translation services;

According to the cloud translation calling device in some embodiments of the present application, further, cluding a decision-making module for judging whether the fund balance of the client or terminal or user is greater than or equal to the amount required for the current calling according to the current content to be translated, and if so, the calling is made, otherwise, the calling is not made; further, wherein, when calling multiple cloud translation services at the same time, the decision-making module judge whether the client or terminal or user fund balance is greater than or equal to the amount of funds required for calling one or more cloud translation services in the multiple cloud translation services according to the current content to be translated; if so, making the calling for said one or more cloud translation services, otherwise not making said calling; wherein, it further includes a billing module, which is used to bill the cloud translation calling each time or in batches; further wherein, the amount of the billing result is subtracted from the user's fund balance; wherein, a upload module is comprised, for uploading the information, content and data of calling cloud translation, the billing result, the user fund balance information, or part of the information to the server each time or in batches; wherein, a record module is comprised, for recording the information, content and data of calling cloud translation, the billing result, the user fund balance information, upload information, or part of the information;

The method for providing cloud translation calling information according to one aspect of the present application is used to provide the above-mentioned cloud translation account information.

According to one aspect of the present application, the method for providing cloud translation calling information includes: Create a cloud translation account; Provide cloud translation calling information or part of the information to the user party or the user; wherein, the cloud translation calling information or part of the information is used to call the cloud translation service.

According to the method for providing cloud translation calling information according to some embodiments of the present application, wherein, the establishment of a cloud translation account is establishing a cloud translation account with a cloud translation provider; wherein, the establishment of the cloud translation account is that the cloud translation calling information provider or a third party establish a cloud translation account with the cloud translation provider; wherein, the cloud translation provider may be one or more; further, the cloud translation calling information is used to call one or more cloud translation services or includes information used to call one or more cloud translation services; further, the cloud translation calling information includes basic information and additional information; further, the basic information includes information for calling cloud translation from a cloud translation provider, and the additional information includes information for management; further, the additional information includes user account information, user fund information or user fund balance information, status information or part of the information; further, the basic information further includes: name of cloud translation provider, website of cloud translation, account name of cloud translation, account code of cloud translation, password of cloud translation, unit price of cloud translation, or part of them; wherein, the unit price of cloud translation is used to charge for calling cloud translation; wherein, the cloud translation calling information or part of the information is provided with encryption; wherein, the cloud translation calling information or part of the information used to call multiple cloud translation services is packaged and provided together.

According to the server in one aspect of the present application, the relevant operations described above are performed.

According to the server in one aspect of the application, wherein, the server is used to provide cloud translation calling information, the cloud translation calling information or part of the information is cloud translation calling information or part of the information provided by a cloud translation calling information provider or a third party; Or the cloud translation calling information includes the information or part of the information obtained by establishing an account with the cloud translation provider for calling the cloud translation service provided by the cloud translation provider; further, the cloud translation calling information includes basic information and additional information; alternatively, the cloud translation calling information or part of the information is used to call one or more cloud translation services or includes information used to call one or more cloud translation services. Or the server calls the cloud translation service according to the request.

According to the server of some embodiments of the present application, wherein, the basic information comprises information for calling cloud translation to the cloud translation provider; wherein, the additional information comprises information for management; further, the additional information comprises user account information, user fund information or user fund balance information, client or terminal fund balance information, status information or part of the information; further, the basic information further includes: name of cloud translation provider, website of cloud translation, account name of cloud translation, account code of cloud translation, password of cloud translation, unit price of cloud translation, or part of them; wherein, the unit price of cloud translation is used to charge for calling cloud translation; wherein, the cloud translation calling information or part of the information is provided with encryption; wherein, the cloud translation calling information or part of the information used to call multiple cloud translation services is packaged and provided together; wherein, the server provides the cloud translation calling information or part of the information to one or more clients or terminals or one or more users; wherein, the cloud translation calling information is obtained by the user online, or provided to the user by email or short message, or downloaded by the client or terminal; wherein, the server provides the cloud translation calling information or part of the information after receiving the request from the client or the terminal or the user; wherein, the server stores the account information of the client or terminal or user, and provides the client or terminal or user with the cloud translation calling information, the account information, fund information or part of the information according to the account information ; further, one client or terminal or user's account can register multiple fund accounts; further, one user account can register the information of multiple clients or terminals; further, a user account or a fund account or a client or terminal can be used to call one or more cloud translation services; further, the cloud translation calling information is obtained by the user online, or provided to the user by email or short message, or downloaded by the client or terminal; wherein, the server also provides relevant information of one or more cloud translation services; further, the relevant information of the one or more cloud translation services is viewed, selected and/or entered by the user, or downloaded by the client or terminal, and is further available for the user to perform the selection and setting; wherein, the server receives and stores relevant data and information uploaded by the client or terminal or user for calling the cloud translation; wherein, the server transmits the client or terminal or user fund balance information recorded and updated therein to the client or terminal.

According to the server of some embodiments of the present application, wherein, comprising: the receiving module is used to receive cloud translation calling information request information, cloud translation calling information and data, billing result information, and user fund balance information sent from the client or terminal or user; The user/client authentication module uses the account information of the client or terminal or user stored in the server to authenticate the identity of the client or terminal or user sending the request or uploading data; cloud translation calling information download module, used to download cloud translation calling information or part of the information related to the client or terminal or user; The cloud translation calling information encryption module is used to encrypt the cloud translation calling information or part of the information that needs to be downloaded; The user/client management module is used to manage, maintain and update client or terminal or user account information, such as account registration, login, query, establishment and recharge of fund accounts, etc.; Cloud translation data management module, used for recording, statistics, query, etc. of cloud translation data and information; further, it is used to carry out the above-mentioned management for clients or terminals or users, or for cloud translation providers to carry out the above-mentioned management; The cloud translation calling information integration module is used to integrate or encapsulate multiple cloud translation calling information or part of the information; further includes: The cost calculation and statistics module is used to calculate the cost of the uploaded information, content and data that calls cloud translation, and further subtract the calculated cost from the user's fund balance; wherein, the server includes a communication interface module, specifically comprising: The cloud translation calling information request download interface is used for the client or terminal or user to send a cloud translation calling information request. After receiving the request, the server will return the corresponding cloud translation calling information or part of the information if the authentication is successful; Cloud translation calls the data and fee upload interface for: The client or terminal or the user sends the successfully transferred cloud translation information, data and fees, and the server performs information and data storage or recording operations and fee deduction operations after receiving the information, data and fees; User fund information download interface, used for: Send the user's fund balance and recharge amount recorded on the server to the client or terminal or user; Cloud translation module download interface, used to download the cloud translation module or cloud translation interface sub-module; The server that calls the cloud translation service according to the request further includes: decision-making module; set the module; billing module; Record storage module.

The system for calling cloud translation according to one aspect of the present application comprises: server or server, wherein, the server or server is used to provide cloud translation calling information or part of the information; Or, the server or server calls the cloud translation service according to the request; at least one client or terminal, in: The client or terminal calls the cloud translation service according to the cloud translation calling information or part of the information provided by the server or the server, or the client or terminal further comprises a cloud translation module, and the cloud translation module according to the service The cloud translation calling information or part of the information provided by the terminal or server can call the cloud translation service.

According to the system for calling cloud translation according to some embodiments of the present application, wherein, the server or server is the server according to the above aspect; The client or terminal is the cloud translation calling device according to the above aspect.

According to the system for calling cloud translation according to some embodiments of the present application, wherein, the cloud translation calling information or part of the information is obtained by the user online and input to the client, or provided to the user by email or text message, or downloaded by the client or terminal; further wherein, the client or terminal directly calls multiple cloud translation services at the same time; further, the server also provides related services; wherein, the server or server provides the cloud translation calling information, the account information, fund information or part of the information to one or more clients or terminals, or one or more users; It can further receive and store the data and information uploaded by the one or more clients or terminals or one or more users for calling the cloud translation; further, the server stores the account information of the client or terminal or user, and provides the client or terminal or user with the cloud translation calling information, the account information, the fund information or other information according to the account information, partial information; further, the cloud translation module comprises a cloud translation interface sub-module, and the cloud translation interface sub-module calls the cloud translation service according to the cloud translation calling information or part of the information provided by the server or server; alternatively, the cloud translation calling information comprises basic information, and further comprises additional information; wherein, the basic information comprises information for calling cloud translation from a cloud translation provider, and the additional information comprises information for management; further, the additional information comprises fund information or fund balance information of a client or terminal or user; wherein, the basic information comprises a unit price of cloud translation, which is used to charge for calling cloud translation; wherein, the client or terminal charges for calling cloud translation on a per-time basis or in batches; further, the client or terminal subtracts the amount of the billing result from the user's fund balance; wherein, the calling cloud translation is billed on a per-time basis or in batches; further, the server subtracts the amount of the charging result from the user's fund balance.

A computer system according to one aspect of the present application, comprising a central processing unit, a memory, wherein, a computer program is stored in the memory, and when the computer program is executed by the processor, the above-mentioned steps of the cloud translation calling method or the cloud translation account providing method are realized.

A computer-readable storage medium according to another aspect of the present application, wherein, a computer program is stored on the storage medium, and when the computer program is executed by the processor, the steps of the above cloud translation calling method or cloud translation account providing method are implemented.

Through the above aspects and embodiments of the present application, cloud translation service results can be obtained quickly and conveniently during the translation process, and multilingual fast cloud translation can be realized, and multiple cloud translations can be called at the same time to obtain multiple cloud translation results, and there is no need to download and install various cloud translation plug-ins one by one and apply for relevant API accounts. It greatly improves the enthusiasm of translators to use various cloud translations, and improves the operability and user-friendliness of using cloud translations. It greatly improves the enthusiasm of translators to use various cloud translations, and improves the operability and user-friendliness of using cloud translations. It can further promote the use and popularization of cloud translation. In addition, through the billing or estimated cost of calling cloud translation, users can know the cost of each call, or can estimate the required cost before calling, so that they can choose the required cloud translation service according to the cost and/or cloud translation quality. In addition, for cloud translation calling service providers (agents), on the one hand, they provide users with convenient and fast cloud translation calling services; on the other hand, they can control and utilize cloud translation calling, and can also effectively manage the users, equipment, client, etc., and can also obtain economic benefits from it.

### Description of Drawings

Fig. 1 is a schematic flow chart of prior art method;
Fig. 2 is a schematic flowchart of a cloud translation calling method provided according to an embodiment of the first aspect of the present application;
Fig. 3 is a schematic flowchart of a method for providing cloud translation calling information according to an embodiment of the second aspect of the present application;
Figs. 4A-4C are schematic structural diagrams of cloud translation calling devices provided according to some embodiments of the third aspect of the present application;
Figs. 5A-5D are schematic structural diagrams of cloud translation calling devices provided according to other embodiments of the third aspect of the present application;
FIG. 6 is a schematic structural diagram of a cloud translation calling device provided according to some further embodiments of the third aspect of the present application;
Fig. 7 is a schematic structural diagram of a server provided according to some embodiments of the fourth aspect of the present application;
Fig. 8 is a schematic structural diagram of a system for calling cloud translation services according to some embodiments of the fifth aspect of the present application;
Fig. 9 is a schematic structural diagram of a system for calling cloud translation services according to other embodiments of the fifth aspect of the present application;
FIG. 10 is a schematic structural diagram of a computer system provided according to an embodiment of the present application.
Fig. 11 is a schematic diagram of a setting method or module for cloud translation calling according to an embodiment of the present application.
Figs. 12A-12C are screenshots of an example of a cloud translation calling device according to the present application, wherein, a specific example of a cloud translation call operation is shown.

### Embodiments

Embodiments of the present application are described in detail below, examples of which are shown in the accompanying drawings, wherein the same or similar symbols throughout represent the same or similar elements or steps or elements or steps having the same or similar functions. The embodiments described below by referring to the figures are exemplary, are only for explaining the present application, and should not be construed as limiting the present application.

In the description of this application, "several" means one or more, and "multiple" means two or more than two. If one or more is not stated before a feature, it means there may be one or more. In multiple terms, "portion" or "part" means one or more of them. If a piece of information can contain multiple content items, if it only contains one piece of content or a few pieces of content, then that piece of content or the few pieces of content can be understood as the information. "Greater than", "less than", "exceeding", etc. are understood as not including the original number, and "above", "below", "within", etc. are understood as including the original number. "First", "second", "third", "first party", "second party", "third party", etc. are only used for the purpose of distinguishing features, and should not be understood as indicating or implying relative importance or implicitly indicating the number of technical features indicated or implicitly indicates the sequence of the indicated technical features.

In the description of this application, it should be noted that unless otherwise specified and limited, the term "installation" should be understood in a broad sense, for example, it can be a fixed connection, a detachable connection, or an integral connection; can be mechanically or electrically connected; can be directly connected or indirectly connected through an intermediary; For software, the software package or file can be put in the appropriate folder (if there is a software package or file with the same name, replace it), or further set up or configure it accordingly (if necessary). "Preset", "pre-configured" or "pre-installed" should be understood in a broad sense, which can be preinstalled, preconfigured, preinstalled, etc., for example: Pre-locate or configure certain information and/or data in software or hardware, or pre-configure with predetermined information and/or data when software or equipment starts, or pre-configure certain information and/or data before using a certain function and/or data, or a software module or hardware module pre-installed in software or hardware. Those of ordinary skill in the art can understand the specific meanings of the above terms in this application in specific situations.

In the description of this specification, references to the terms "one embodiment", "some embodiments", "exemplary embodiments", "example", "specific examples" or "some examples" are intended to mean that a specific feature, structure, material, or characteristic described by an embodiment or example is included in at least one embodiment or example of the present application. In this specification, schematic representations of the above terms do not necessarily refer to the same embodiment or example, furthermore, the specific features, structures, materials or characteristics described may be combined in any suitable manner in any one or more embodiments or examples.

In order to make the purpose, technical solution and advantages of the present application clearer, the various aspects and embodiments of the present application will be further described in detail below in conjunction with the accompanying drawings.

### [Cloud Translation Calling Method]

According to the first aspect of the present application, a cloud translation calling method is provided.

### [Method Steps]

Referring to Fig. 2, the cloud translation calling method provided according to some embodiments of the present application is described, the method comprises:
Step S1: receiving or obtaining content to be translated; Specifically, the content to be translated may be a document (or file), the entire content of the document, a paragraph, a sentence, a phrase or phrase, or a word. The content to be translated can also be a piece of speech, and the speech can be converted into text if necessary. The content to be translated can also be a picture containing text, and the text in the picture can be recognized if necessary.
Step S2: Call the cloud translation service according to the cloud translation calling information or part of the information, wherein, the cloud translation calling information or part of the information can be provided by the cloud translation calling information provider or by the third party; alternatively, the cloud translation calling information comprises basic information, and further comprises additional information; The basic information comprises the information used to call cloud translation to the cloud translation provider, and further the basic information also comprises the unit price of cloud translation, which is used for billing or estimated fees for calling cloud translation; the additional information comprises information for administration or management; alternatively, the cloud translation calling information or part of the information is used to call one or more cloud translation services or comprises information used to call one or more cloud translation services. Specifically, step S2 may be using the cloud translation calling information (provided by the cloud translation calling information provider or a third party) or part of the information to directly call the cloud translation service to the cloud translation provider. Specifically, step S2 may also using the cloud translation calling information provided by the cloud translation calling information provider or a third party or part of the information to call the cloud translation service to the cloud translation provider through a proxy or an intermediate server. According to some embodiments, the cloud translation calling information (provided by the cloud translation calling information provider or a third party) contains at least the necessary information for calling the cloud service; further, the additional information comprises user fund information or user fund balance information; it may further include account information and/or fund information built or registered by the user with a third party. More descriptions will be given below about cloud translation calling information.

According to the cloud translation calling method of the present application, on the one hand, according to the cloud translation calling information or part of the information provided by the third party, it can be conveniently used and called without installing plug-ins or requiring the user to apply for a registered account with the cloud translation provider With cloud translation services, thereby quickly getting cloud translation results without copying and pasting. On the other hand, according to the additional information in the cloud translation calling information, the cloud translation calling can be managed.

Further, according to some embodiments of the present application, the method may also include:
Step S3: getting the result of the cloud translation service. Step S3 may further be: getting and displaying the results of the cloud translation service. Because the cloud translation calling information comprises information that can be used to call multiple cloud translation services, multiple cloud translation services are called for one translation content at the same time, and multiple cloud translation results are obtained, which can be used to compare and select the optimal result, so improve translation quality.

The cloud translation calling method according to some embodiments of the present application also comprises step S4: Cloud translation calling information receiving or obtaining step. Specifically, before calling Cloud Translation, receiving or obtaining cloud translation calling information or part of the information provided by a cloud translation calling information provider or a third party, or obtaining or receiving cloud translation calling information or part of the information provided by a cloud translation calling information provider or third party. This step can be before S2 or before S1. This step can also be performed only once, and the obtained cloud translation calling information or part of the information can be saved, and then the obtained cloud translation calling information or part of the information can be used multiple times. The ways of obtaining cloud translation calling information or part of the information may include manual acquisition, SMS, email, instant messaging, communication interface and so on. For example, cloud translation calling information or part of it can be downloaded from the server. For more details, please refer to the following description of the ways and methods for providing cloud translation calling information. For example, if the cloud translation calling information provider or a third party provides cloud translation calling information or part of the information in a certain way or method, the user side will receive or obtain it in a corresponding way or method. In the case of cloud translation calling information or part of the information is preset, this step may not be necessary, so the cloud translation calling method of the present application becomes very simple.

According to the cloud translation calling method of some embodiments of the present application, part of the cloud translation account information can be preset, and the other part can be obtained through a receiving or obtaining step. For example, general information (such as well-known names, URLs, etc.) is preset or pre-configured, and important information (such as passwords, fund information) is obtained through a receiving or obtaining step, which can reduce information input and/or transmission.

According to some embodiments of the cloud translation calling method of the present application, the cloud translation calling information or part of the information (such as password and fund information) is encrypted and provided. The encrypted cloud translation calling information or part of it is decrypted before calling. Due to the possibility of stealing and misappropriation during the provision and/or transmission of cloud translation calling information or part of it, it is necessary to encrypt cloud translation calling information or part of it. Encryption and decryption technology can adopt various technologies at present.

### [Cloud Translation Calling Information]

Cloud translation calling information is the information used for calling cloud translation, billing and/or management according to the present application, especially in the case of calling cloud translation by means of an interface such as an application programming interface (API) calling. The cloud translation calling information may include basic information, and may further include additional information. Basic information at least (but not limited to) can be used to call a cloud translation service provided by a cloud translation engine, or at least include cloud translation account information used to call a cloud translation service, for example, basic information or content of cloud translation account information and the format can be recognized by a cloud translation provider or conform to the API interface specification provided by a cloud translation provider. Or, after transforming the content and format of the basic information or cloud translation account information, it can be recognized by a cloud translation provider or conform to the API interface specification provided by a cloud translation provider. Furthermore, the basic information also comprises the unit price of cloud translation, which is used for billing or estimated charging for calling cloud translation.

Additional information can also be referred to as management information, such as the account information and/or fund information built or registered by the user with the cloud translation calling information provider or a third party, which can be used to manage the user and the cloud translation calling.

Specifically, the basic information of cloud translation calling information may include (but not limited to): name of cloud translation provider, website of cloud translation, account name of cloud translation, account code of cloud translation, password of cloud translation, unit price of cloud translation, or part of them; Here, the name of cloud translation provider and website of cloud translation are used to distinguish different cloud translation services. The account name of cloud translation, account code of cloud translation, and the account password of cloud translation can be different for each cloud translation service, or they can be unified, which is the same for each cloud translation service. For the case of only one cloud translation service, the name of cloud translation provider and the URL of cloud translation can be omitted or defaulted. Cloud translation unit price or unit price for short can be specific to a certain cloud translation service or can be unified, and it is used for billing cloud translation calls. The cloud translation unit price is not necessary to call the cloud translation service, so it can also be considered as additional information.

Additional information may include (but not limited to) user account registration information, fund information, status information, cloud translation unit price or part of them. Further, the user account is a user account at the cloud translation calling information provider or a third party; further wherein, one user account can register multiple fund accounts; further, one user account can register the information of multiple clients or terminals; further, a user account or a fund account or a client or terminal can be used to call one or more cloud translation services; The registration information of the user account may include user name, user code, user ID, nickname, password, etc. or part of them; For example, the fund information of the user account can be fund balance, virtual currency or reputation points, etc.; Status information can be, for example, user level, reputation level, authorization level, authorization code, authorization date, etc.; further, client or terminal information, such as: client type, client ID, client code, client machine code, client password, etc., similar to user account registration information, may also be included in additional information. This information can be used to manage and provide services for users or clients or terminals and cloud translation callings. For example, corresponding cloud translation calling information can be provided for a specific user (party). The fund balance can also be points or similar virtual currency or the like. According to some embodiments of the present application, the cloud translation calling information may include information for calling one cloud translation, or may include information for calling multiple cloud translations. Additional information can be used with the basic information for calling one cloud translation, and can also be used with multiple basic information for calling multiple cloud translations. One basic message can also be used to call multiple cloud translators.

For example, a user who registers with the cloud translation calling information provider or a third party (platform) becomes a user (or third-party member) of the cloud translation calling information provider or a third party, thus forming a third-party user account, It can include a fund account, and can recharge the fund account. Funds (balance) in the fund account can be used to call the cloud translation service mentioned above. According to the present application, there may be one or more callable cloud translation services. That is to say, multiple cloud translation services can be called with one third-party user account and/or fund account. Specifically, in the case of providing multiple cloud translation services, one or several of the various cloud translations can be set as the default online translation engine, so that when receiving the content to be translated, according to the present application, the default cloud translation service can be called.

When the basic information or cloud translation account information conforms to the API interface specification provided by the cloud translation provider, the cloud translation calling information or part of the information can be customized according to the API interface specification provided by the cloud translation provider. The cloud translation calling information or the cloud translation account information in it can be unified and standardized, or different content, format or standard can be adopted for each cloud translation service (engine).

### [Example 1 of Cloud Translation Calling Information]

An example of cloud translation account information (content and format) is given below:

| | | |
|---|---|---|
| ServiceNa | String | Cloud translation service name |
| ServiceIP | String | Cloud translation IP address |
| AccountNa | String | account name |
| AccountCo | String | account number |
| key | String | account key |
| price | Int | Cloud translation unit price (per |
| Balence | Int | User Fund Balance |

Wherein, ServiceName is the name of the cloud translation service, indicating which cloud translation service provider is called with the cloud translation calling information. If there is only one cloud translation provider or when the basic information (for example, AccountNane, AccountCode, and Key) of all cloud translation services is unified, the cloud translation provider name (ServiceName) can be defaulted. The cloud translation IP address (ServiceIP), account name (AccountName), account code (AccountCode) and translation password (Key) are basic information, which are used to request a calling of the cloud translation service to a cloud translation provider, and use them to call the corresponding cloud translation service and get cloud translation results or feedback. The cloud translation IP address (ServiceIP) is the IP address used to send the cloud translation service request to the cloud translation provider through the Internet, and the account name (AccountName), account code (AccountCode) and translation password (Key) are used for cloud translation provider to identify or authenticate the (legitimate) account. AccountNane, AccountCode and Key can be integrated into one or two. The user's fund balance (Balance) is additional information, which is used to manage and provide services to the user party. Wherein, the cloud translation unit price (Price) is necessary for billing, so it can be considered as basic information, but it is unnecessary for calling cloud translation services, so it can also be considered as additional information. Specifically, the cloud translation unit price (Price) can be used to bill each cloud translation calling, and can also be used to estimate fees in the decision-making before the calling (as described below); Furthermore, the cloud translation unit price (Price) may be the same as or different from the charging standard of the cloud translation provider. The user's fund balance (Balance) can be used to provide a basis for decision-making on whether to allow callings. The cloud translation provider name (ServiceName) can also be considered as basic information or additional information or separate information. The cloud translation provider name (ServiceName) should correspond to or be consistent with the cloud translation IP address (ServiceIP).

The above is just an example, and the field design can be unified or standardized, and can be used in various cloud translation services. But it should be noted that not every field is required. For example, ServiceName, AccountNane, and AccountCode can be omitted or removed, and only one or two of AccountNane, AccountCode, and Key can be selected.

Specifically, the cloud translation calling information can be formulated based on the cloud translation account information established with the cloud translation provider (the cloud translation calling information provider or a third party) and adding (additional) information according to (management) needs.

### [Example 2 of Cloud Translation Calling Information]

Another cloud translation calling information is given below, It contains information for calling multiple cloud translations.

| | | |
|---|---|---|
| UserName | String | User name |
| UserCode | String | user code |
| UserKey | String | user key |
| Cloud Services | object | Cloud Translation Service Package |
| Balence | Int | Account balance |

For example, CloudServices (cloud translation service package) can be specified as follows:

```
     " Cloud Services":
     [
         {
          "cloudname": "google"
          "key":"AIW5OHR2SmDzaSyDkZccjt90nf812pGKAKB6CW0
          "price": "3
         },
         {
          "cloudname":"iptranslate"
          "key": "b10bc6bde351fb a75fcb7671fcb1707e
          "AccountName": "client_ID_KZXF_0868"
          "price": "2
         }
         { "cloudname": "aitrans"
          "key": "a75fcb767b10bc6bde351fb1fcb1707e
          "AcountCode": "LA3KZI9XF0192"
          "price": "8
         }
      ] 
```

Wherein, UserName is a user name, UserCode is a user code, and UserKey is a user password, all of which can be regarded as additional information. CloudServices (cloud translation service package) is the basic information, It can contain multiple cloud translation information (account information for calling cloud translation), and it can be seen from the specific examples that the cloud translation service package contains information and data for calling three cloud translation services. The first one is used to call Google, which comprises the cloud translation service provider name "google", the basic information "key" (cloud translation account password) used to call Google cloud translation service, and "price" (unit price); The second one is used to call Xiaofei, which comprises the cloud translation service provider name "iptranslate", the basic information "key" (cloud translation account password) and AccountName (cloud translation account name) used to call the cloud translation service, and "price" (unit price). The third is used to call Aitrans Online, which comprises the cloud translation service provider name "Aitrans", cloud translation service "key" (cloud translation account password) and AcountCode (cloud translation account code) of the basic information used to call AiTrans Online, and "price" (unit price). Wherein, "price" (unit price) is necessary for billing, so it can be considered as basic information, but it is unnecessary for calling the cloud translation service, so it can also be considered as additional information. "price" (unit price) can be unified into one information when the prices of the above three cloud translation services are unified. "price" (unit price) can also be used for estimating fees in pre-call decisions (described below). Further, each cloud translation unit price (Price) may be the same as or different from the charging standard of the corresponding cloud translation provider. Using the cloud translation service package in the cloud translation calling information, the above three cloud translation services can be called (simultaneously) and corresponding results or feedback can be obtained.

### [The Concept of Cloud Translation Calling Information Provider or Third Party]

In this application, "cloud translation calling information provider" is a concept, and for convenience and simplification, it can also be referred to as a "third party", which can be any party but not the user party or user (referred to as the first party) and the cloud translation provider (referred to as the second party). More specifically, the cloud translation calling information provider (third party) can be the user side in which a user calls the cloud translation service, or any other party except the user (first party) and the cloud translation provider (second party).

In addition to providing cloud translation account information for calling cloud translation services to the user or the user party (first party), the cloud translation calling information provider or the third party may also provide the user or the user party (first party) with information about the cloud translation Billing, access or calling services and related management information, including (but not limited to) price information, fund information, recharge and user management information, etc.

Specifically, the third party establishes a cloud translation account with the cloud translation provider party or the provider (the second party). More specifically, a third party may establish a cloud translation account with the cloud translation provider or provider (second party) in its own name (which may include identity, contact information, bank information, payment method, etc. or part of the information). Thus, the information (cloud translation account information) for calling the cloud translation service provided by the cloud translation provider is obtained. Wherein, there may be one or more cloud translation provider parties or providers (second parties), that is, a third party may establish a cloud translation account with one or more cloud translation providers (second parties). Then, according to the obtained cloud translation account information and management needs, the cloud translation calling information can be formulated. The cloud translation calling information is then provided to the user side or the user (first party). Wherein, there may be one or more user parties or users (first parties). The third party can customize different cloud translation calling information for different users, or the cloud translation calling information provided to different user parties or users (first party) comprises different information (for example, the information used to identify the user party or user (first party) ). Therefore, the user party or the user (the first party) can conveniently and quickly call the cloud translation service after obtaining the cloud translation calling information, and the user does not need to go to each cloud translation provider (the second party) to register and pay related costs, etc. On the other hand, a user party or user (the first party) can call the cloud translation service only after obtaining the cloud translation calling information that belongs to him.

A third party may be an individual, enterprise, entity, institution, etc., or a third party's server, service end, computer system or network platform, etc. For the user side or the user, the third party can be the provider of the cloud translation calling method and/or device according to the present application; Or it can be said that it is the provider of the cloud translation calling information according to the present application, that is, the provider of the cloud translation calling information. For the cloud translation provider, the third party can be said to be its agent or agency. From a commercial point of view, if the cloud translation provider charges for the cloud translation service it provides, the user or the user (first party) pays the cloud translation calling information provider (third party), and the cloud translation calling information provider (the third party) pays the cloud translation provider (the second party). Wherein, the fee paid by the user or the user (first party) to the cloud translation calling information provider (third party) may or may not be equal to that paid by the cloud translation calling information provider (third party) to the cloud translation provider (the second party).. That is to say, the charging standard of the cloud translation provider (second party) and the charging standard of the cloud translation calling information provider (third party) may or may not be the same.

Here, the first party is the "user side", which can be referred to as "user" for short. The "user side" is the user of the cloud translation calling method and/or device of the present application, which can be an individual, enterprise, entity, institution, etc. or Clients, terminals, electronic devices, servers, service ends, computer systems or network platforms, etc. owned or established by them (theirs). The "user party" may include the "internal user" who uses the method and/or device of the present application. "Internal users" can be one or more. For example, the "Internal User" may be affiliated with the "User Party" or "User", or other parties permitted by the "User Party" or "User". The cloud translation calling information used by the "internal user" is the cloud translation calling information provided by the third party to the "user side" or "user". Third parties may also include "internal users" (see explanation above) using the methods and/or apparatus of the present application.

If a certain user party or user provides cloud translation calling information according to the present application to other user parties or users (first party) in order to use the method and/or device of the present application, then the certain user party or user becomes The third party (that is, the cloud translation calling information provider). If a cloud translation provider establishes a cloud translation account with another cloud translation provider (the second party) and provides the user party or the user (the first party) with the cloud translation calling information according to the present application, then the certain cloud translation provider becomes a third party (that is, cloud translation calling information provider).

The "user side" or "user" (the first party) can use the method and/or device of the present application on various devices, such as various computers, various terminal devices, various electronic devices, various servers, etc. The third party can carry out according to the method and/or device of the present application on various equipment, such as various computers, various terminal equipment, various electronic equipment, various servers, the Internet or internal network, various communication networks or platforms, etc. Set up or configure for user use. The various devices mentioned above include software, hardware, or a combination of software and hardware. Third parties may also provide the various equipment mentioned above, The method and/or device according to the application are provided or configured therein. A third party may also provide the method and/or device according to the present application so that the "user side" or "user" (first party) can use, download, install and use the method and (software) device of the present application.

Description used in this application: The first party, second party, third party, etc. are for users who call the cloud translation service, and are only defined for distinction. Of course, other sequences, definitions and descriptions can also be used. The sequence, definitions and descriptions here are also applicable to the following descriptions of the cloud translation calling device, server, system, etc. of other aspects of the present application.

### [Examples]

According to some embodiments of the cloud translation calling method of the present application, the cloud translation calling information or part of the information is encrypted and provided. The encrypted cloud translation calling information or part of it is decrypted before calling. Encryption and decryption can also be understood or extended as transformation and inverse transformation. Invoking cloud translation services may be calling one or more cloud translation services at the same time. The cloud translation calling information or part of the information used to call each of cloud translation services can be packaged together and provided. The encapsulated cloud translation calling information or part of it can be parsed before calling. Encapsulation and encryption means can be used simultaneously.

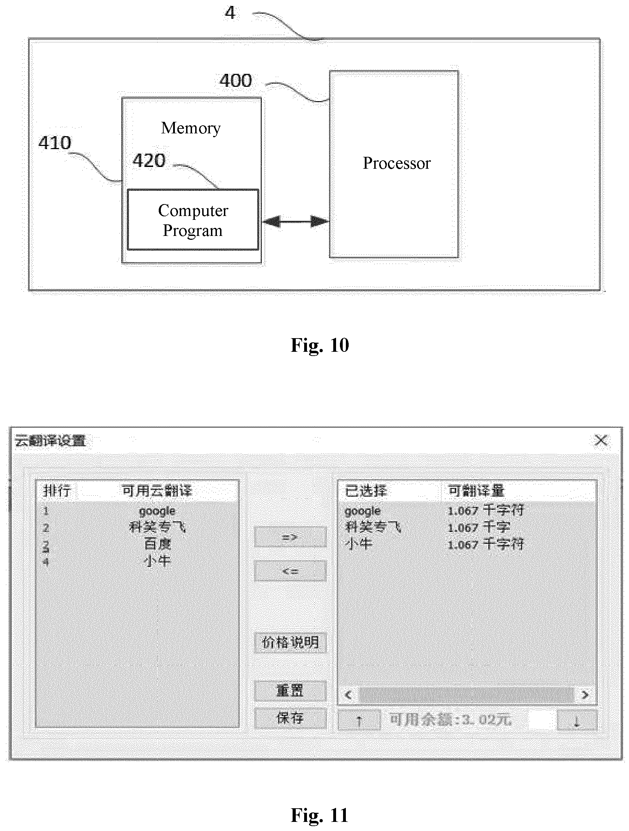

Multiple cloud translation services can be selected and prioritized by the user (see Figure 11); further, calling the selected cloud translation service according to the priority order, and/or display the calling results of the selected cloud translation services according to the priority order;
According to some embodiments of the method for calling cloud translation of the present application, each calling of cloud translation is billed on a per-time basis or in batches. For example, if the number of original words (SrcText) is 2,000 characters when calling cloud translation, and the unit price (Price) of the called cloud translation service is 3 yuan per 1,000 words, the cost of this call is 2*3 equals 6 yuan . Further wherein, the amount of the billing result is subtracted from the user fund balance. For example, the fund balance (Balance) before the above cloud translation calling is 100 yuan, then after the above cloud translation calling, the fund balance (Balance) becomes 96 yuan. Further, before calling cloud translation, a decision is made based on the user's fund balance. Specifically, the decision-making comprises judging whether the user's fund balance is greater than or equal to the amount required for the current calling according to the current content to be translated, and if so, make the calling; otherwise, do not make the calling. Further, wherein, when calling multiple cloud translation services at the same time, the decision-making module judge whether the client or terminal or user fund balance is greater than or equal to the amount of funds required for calling one or more cloud translation services in the multiple cloud translation services according to the current content to be translated; if so, making the calling for said one or more cloud translation services, otherwise not making said calling;
According to some embodiments of the cloud translation calling method of the present application, the cloud translation calling information or part of the information is downloaded from the server. Wherein, the server may be a server of third-party (or a third-party server). wherein, the cloud translation calling information or part of the information is provided with encryption; Further, the cloud translation calling information may include cloud translation calling information for multiple cloud translation services; wherein, the cloud translation calling information or part of the information used to call multiple cloud translation services is packaged and provided together.

Some embodiments of the method for calling cloud translation according to the present application can be applied to clients or terminals. cloud translation calling information or part of it can be preset in the client or terminal. Alternatively, the cloud translation calling information (provided by a third party) or part of the information is input by the user into the client or terminal. Alternatively, cloud translation calling information or part of it is download from a (third-party) server to the client or terminal.

According to some embodiments of the cloud translation calling method of the present application, the user's fund balance information is preset in the client or terminal device, or is input by the user into the client or terminal, or downloaded from the server; Further, the user's fund balance information encrypted is decrypted by the client or terminal device. Encryption and decryption can also be understood or extended as transformation and inverse transformation.

According to some embodiments of the cloud translation calling method of the present application, the relevant information of multiple cloud translation services (see FIG. 11 ) is updated and provided by a third party or a third party server; Further, the relevant information of multiple cloud translation services is referenced, selected and/or entered by the user, or downloaded by the client or terminal device for the user to set.

According to some embodiments of the cloud translation calling method of the present application, the content and data of calling cloud translation, billing result information and/or user fund balance information are uploaded to the server each time or in batches; wherein, the server transmits the user fund balance recorded and updated therein to the client or terminal; further, the content and data of calling cloud translation, billing result information, user fund balance information and/or upload information (such as whether the upload is successful, etc.) can be recorded locally on a per-time or batch basis.

For example, suppose (client or terminal device) provides with cloud translation services of the following online translation engines: Aitrans, Baidu, Google, Kezhuan Xiaofei, Mavericks, Xinyi, Youdao and other cloud translation services, if Aitrans, Baidu, Google is set as the default cloud translation engine, then when receiving the content to be translated , the cloud translation interface module directly calls the cloud translation services provided by Aitrans Online, Baidu, and Google Cloud Translation Engine, that is, the translation results provided by Aitrans Online, Baidu, Google and other cloud translation engines can be obtained and can be displayed further for users' reference, comparison and selection. Of course, only one of them, such as the first result, can be displayed or selected.

Taking the client or terminal applying the cloud translation calling method provided by the embodiment of this application as an example, before applying it, first is to obtain the cloud translation calling information, It contains cloud translation account information corresponding to different cloud translation engines, and then stored locally on the client or terminal, so that the cloud translation account information corresponding to different translation engines or part of the information is preset in the client or terminal. In this way, when applying, the user can directly use the cloud translation calling information or cloud translation account information preset in the client or terminal, and the cloud translation module or the cloud translation interface sub-module can directly call the cloud translation service without the need for the user to execute the input operation of cloud translation calling information or cloud translation account information, thereby simplifying the translation operation of the user using the client, and improving the user experience of the client. For details on how to obtain cloud translation calling information, please refer to the descriptions of various aspects and embodiments below.

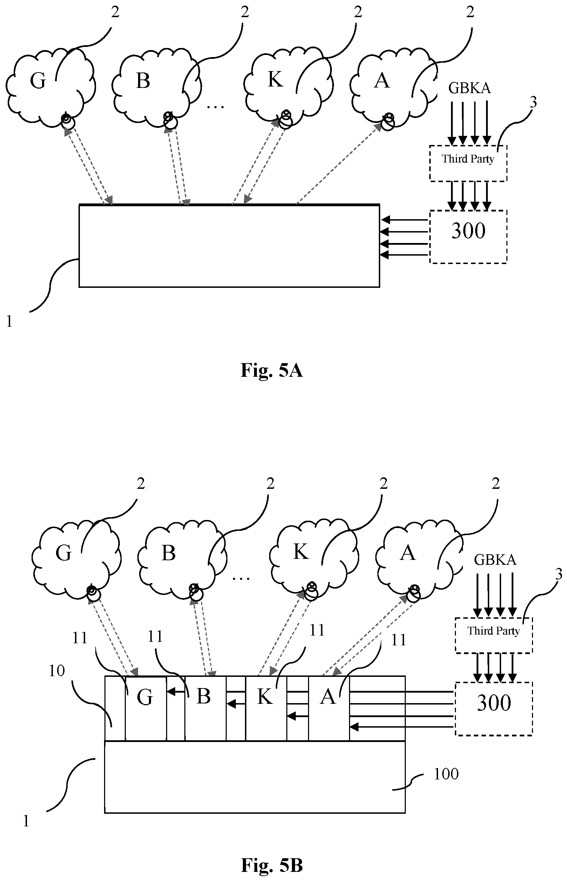

Figs. 5B to 5D, specifically, the client or terminal 1 or the cloud translation module 10 comprises a cloud translation interface sub-module G for the cloud translation engine G, a cloud translation interface sub-module B for the cloud translation engine B, and a cloud translation interface sub-module B for the cloud translation engine B, the cloud translation interface sub-module K for the translation engine K, the cloud translation interface sub-module A for the cloud translation engine A, etc. After the client or terminal 1 or the cloud translation module 10 acquires the cloud translation calling information (which comprises the respective cloud translation account information of different cloud translation engines), it stores it, so that the cloud translation interface sub-module G stores the cloud translation engine G's cloud translation account information, cloud translation interface sub-module B stores cloud translation account information of cloud translation engine B, cloud translation interface sub-module K stores cloud translation account information of cloud translation engine K, and cloud translation interface module A stores cloud translation account information Cloud translation account information of cloud translation engine A. In this way, when the client calls the cloud translation service, according to the user's selection of the translation engine (that is, the translation tool), the corresponding cloud translation interface sub-module is enabled to call the corresponding cloud translation service. For example, if the cloud translation engine selected by the user is cloud translation engine G and cloud translation engine B, then the cloud translation interface sub-module G and cloud translation interface sub-module B use their respective cloud translation account information to call the corresponding cloud translation service, to get the cloud translation result provided by cloud translation engine G and the cloud translation result provided by cloud translation engine B. Alternatively, the respective cloud translation account information of different cloud translation engines are all stored in the client or terminal 1 or the cloud translation module 10, and the cloud translation interface sub-modules A, B, K, and G use their own cloud translation account information to call their respectively corresponding cloud translation.

In some embodiments, the cloud translation calling information provided by a third party or part of the information is input by the user into the client or terminal.

For example, if the cloud translation calling information (provided by a third party) or part of the information is provided to the user's mobile phone, tablet computer or other mobile terminal through SMS, email, etc., then the user will obtain the information (provided by the third party) through the mobile terminal. After the cloud translation calling information or part of the information is input by the user into the client or terminal, the client or terminal can (directly) call the cloud translation service.

In some embodiments, the cloud translation calling information (provided by a third party) or part of the information is downloaded from the server by the client or terminal. For example, the client or terminal sends a download request for the cloud translation calling information to the server, so as to obtain the cloud translation calling information or part of the information provided by the third party.

In some embodiments, the third party is a third party server.

In the embodiment of this application, the third-party server can be used to provide cloud translation accounts (to clients or terminals), and can also manage clients, terminals or users. Servers can also be divided into server 1 and server 2. For example, assume that server 1 is a server that provides cloud translation account information, and server 2 is a server that manages clients or terminals or users.

The above-mentioned clients or terminals may be dedicated, or translation software, auxiliary translation software, application programs, modules embedded in applications, etc. The above-mentioned terminal can be understood as a terminal device, which can be any electronic device, including a mobile phone, a tablet computer, a PC, a wearable device, etc., or a module device integrated into an electronic device, or a server, a computer system or a network platform system wait.

### [Example of calling method of cloud translation]

The following exemplarily gives an example of the specification of the cloud translation calling method according to the embodiment of the present application.
[Description]: Provide inter-translation services between multiple languages through the HTTP protocol, transfer the content to be translated to the device, module or interface, and specify or default the cloud translation provider and the source language and target language to be translated, and the corresponding cloud translation results can be obtained.
[Access method] : HTTP (URL request based on HTTP protocol)
[Cloud translation provider] : Aitrans Online
[Request address] : http://global.aitrans.org/AiServer/translation (the ip address is the IP address of the server where the cloud translation engine system is deployed)
[request method] : GET/POST
[request parameter] :

| **Field Name** | **Type** | **Description** |
|---|---|---|
| ServiceName | String | Cloud translation service name |
| From | String | Source Language : Language parameters of the text to be translated |
| To | String | Target language: Translation target language parameter |
| AccountName | String | account name |
| AccountCode | String | account number |
| Key | String | account key |
| SrcText | String | String to be translated (UTF-8 encoding) |

[Return type]: JSON (Format)

| **Field Name** | **Description** |
|---|---|
| From | Source language |
| To | Target language |
| SrcText | string to be translated |
| TgtText | Translation result string |
| ErrorCode | error code |
| ErrorMsg | error message |

Wherein, "From" indicates the source language for calling the cloud translation service, for example, 1 (indicates English);"To" indicates the target language for calling the cloud translation service, for example, 2 (indicates Chinese).

The cloud translation calling process is as follows: after the cloud translation calling requester receives or obtains the string to be translated (for example, SrcText="Hello"), based on the cloud translation calling information or part of it (for example: AccountName (account name), AccountCode (account code) Key (account password)) send a request to the cloud translation provider or engine (Aitrans Online) through HTTP access or communication (URL request method based on HTTP protocol), and the string to be translated (SrcText) is translated from English (From=1) to Chinese (To=2), and the specific request method can be GET or POST.

After receiving the above request, the cloud translation provider or engine (Aitranslation Online) will perform corresponding cloud translation operations according to the above parameters, including translating the string to be translated ("Hello") from the source language (English) to the target language (Chinese), and feed back the translation result string (" 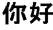 ") to the requesting party. If there is an error in the request parameter or an error occurs during processing, the corresponding ErrorCode (error code) can be returned and the error message can be indicated in the field ErrorMsg (error message). The above is just an example, field design can be unified or standardized. It is also possible to customize specific cloud translation calling information or part of the information for various or individual cloud translation services.

But it should be noted that not every field is required. For example, ServiceName, AccountNane, and AccountCode can be omitted or removed, and only one or two of AccountName, AccountCode, and Key can be selected. In the returned information, ErrorCode and ErrorMsg are not required, and only need to return TgtText (translation result string). Wherein, the above-mentioned cloud translation calling information or part of the information (ServiceNane, AccountNane, AccountCode and Key, etc.) may be obtained from a third party. Wherein, the access method (or communication method) may also adopt a socket (such as WinSocket, WebSocket, etc.) technical method.

Any method of using, providing, configuring, and setting the present application, using, providing, configuring, and setting the method of the present application on various devices such as various computers, various terminal devices, various servers, etc., manufacturing, selling, using, and providing all the above-mentioned various devices provided or configured with the method according to the present application are within the scope of protection of the present application.

### [Cloud translation calling method - client or terminal]

In the case where the method for calling cloud translation of the present application is applied to a client or terminal, the method for calling cloud translation provided by the client or terminal according to one aspect of the present application comprises:
Step S10, the client or terminal device receives or acquires the content to be translated;
Step S20: the client or terminal device calls the cloud translation service according to the cloud translation calling information or part of the information provided by the third party.

Wherein, step S20 may be that the client or terminal directly calls the cloud translation service to the cloud translation provider by using the cloud translation calling information or part of the information provided by the third party.

Specifically, cloud translation account information and its operation and processing can refer to the above description, The subject of related operations and processing may be a client or a terminal. Further, the above method also comprises: Step S30: the client or terminal obtains and/or displays the result of the cloud translation service.

Further, the above method also comprises step S40: receiving or obtaining cloud translation calling information or part of it.

Specifically, before the client or terminal device calls the cloud translation, the cloud translation calling information or part of the information is obtained from a third party or the cloud translation calling information or part of the information from the third party is obtained. This step S40 can be before S20 or before S10. This step S40 can also be executed only once, and the obtained cloud translation calling information or part of the information can be saved in the client or terminal device, and then the obtained cloud translation calling information or part of the information can be used multiple times. The cloud translation calling information or part of the information can be obtained in various ways, for example, the cloud translation calling information or part of the information can be downloaded from a server. Specifically, it can be downloaded from the server or service end by sending a request from the client or terminal through the communication interface. The following exemplarily gives an example of the specification used in the cloud translation calling information acquisition step.
[Description]: Used to obtain cloud translation calling information.
[Access method] : HTTP (URL request based on HTTP protocol)
[Cloud translation calling information provider] : Global Aitrans
[Request IP] : http://127.0.0.1 :8083/aitrans/cloudservice (the ip address is the IP address of the server that provides cloud translation calling information)
[Request method] : GET/POST
[Request Fields] :

| **Field Name** | **Type** | **Description** |
|---|---|---|
| UserName | String | user name |
| UserCode | String | user code |
| ClientCode | String | Client Code |
| KeyWord | String | user key or client key |
| ClientIP | String | ClientIP |

Wherein, UserName, UserCode, ClientCode, and KeyWord can be used to identify users and/or clients, and these four fields can be integrated into one, or one or part of them can be selected.ClientlP is the IP address of the client or terminal sending the request, which can be omitted. When the server or service end receives the above request, it will perform response operations, including user or client or terminal verification, cloud translation calling information downloading, user related information recording and downloading, etc. For the content and format of the response information, please refer to the example 1 and example 2 of the cloud translation calling information given above:

### [Example 1]

| **Field Name** | **Type** | **Description** |
|---|---|---|
| ServiceName | String | Cloud Translation Service Name |
| ServicelP | String | Called IP address |
| AccountName | String | Account name |
| AccountCode | String | Account code |
| Key | String | Account Key |
| Price | Int | Cloud Translation unit price (per thousand words) |
| Balence | Int | Account Fund balance |

### [Example 2]

| Field Name | Type | Description |
|---|---|---|
| UserName | String | user name |
| UserCode | String | user code |
| UserKey | String | user key |
| CloudServices | Object | Cloud Translation Service Package |
| Balence | Int | Account Fund balance |

```
     "cloudname": "google
     "key":"AIW5OHR2SmDzaSyDkZccjt90nf8l2pGKAKB6CW0
     "price": "3
         }
         {
          "cloudname":"iptranslate
          "key": "b10bc6bde351fb a75fcb7671fcb1707e
         "AccountName": "client_ID_KZXF_0868"
         "price": "2
          }
          {
          "cloudname": "aitrans
          "key": "a75fcb767b10bc6bde351fb1fcb1707e
         "AcountCode": "LA3KZI9XF0192"
         "price": "8
          }
          ]
```

For specific descriptions, refer to the above descriptions, and repeated descriptions are not repeated here.

The following is an example of the specification used in step S20 of cloud translation calling method by the client or terminal.
[Description]: The client calls the cloud translation service to the specified or default cloud translation provider based on the cloud translation calling information or part of the information through the HTTP protocol, and obtains the corresponding cloud translation result.
[Access method]: URL request based on HTTP protocol
[request address] : http://global.aitrans.org/AiServer/translation (the ip address is the IP address of the server where the cloud translation engine system is deployed)
[request method] : GET/POST
[request parameter] :

| **Field Name** | **Type** | **Description** |
|---|---|---|
| ServiceName | String | Cloud translation service name |
| From | String | source language: Language parameters of the text to be translated |
| To | String | target language: Language parameters of translation target |
| AccountName | String | Account name |
| AccountCode | String | Account code |
| Key | String | Account key |
| SrcText | String | String to be translated (UTF-8 encoding) |

Return Type : JSON (Format)

| **Field Name** | **Description** |
|---|---|
| ResponseCode | Returning code |
| From | source language |
| To | target language |
| SrcText | String to be translated |
| TgtText | Translation result string |
| ErrorCode | Error code |
| ErrorMsg | Error message |

For specific description, refer to the above description, and no repeated description is given here.

Wherein, the access mode (or communication mode) used in the above two steps may also adopt the technical mode of Socket (such as WinSocket, WebSocket, etc.).

Correspondingly, the specific method, field content and design can be adjusted and changed as required.

### [Method for providing cloud translation calling information]

According to the second aspect of the present application, a method for providing cloud translation calling information is provided.

Referring to FIG. 3, a method for providing cloud translation calling information according to some embodiments of the present application comprises:
Step S5: Create a cloud translation account;
Step S6: Provide cloud translation calling information or part of the information. The cloud translation calling information or part of the information is used to call the cloud translation service.

Wherein, step S5 (establishing a cloud translation account) may be establishing a cloud translation account with the cloud translation provider to obtain cloud translation account information;

Furthermore, a third party may establish a cloud translation account with the cloud translation provider (the second party), and further a third party in its own name (including information such as identity, contact information, and/or payment method) establishes a cloud translation account with the cloud translation provider party or provider (second party);

Wherein, there may be one or more cloud translation providers parties or providers (second parties).

For example, a third party may establish a corresponding cloud translation account through the server or platform system of a certain cloud translation provider (second party).

According to the information of the established cloud translation account, and according to the needs (such as billing and management needs), the content and format of the cloud translation calling information are formulated (by the third party).

Wherein, the necessary information and format for calling cloud translation can directly conform to the specifications of the cloud translation provider, or can be adjusted or transformed as needed (such as changing the data type of information, adding additional information, encryption, etc., according to the needs of transmission or communication, etc.; the reverse operation can be proformed before calling cloud translation.

The (third party) may also determine with the cloud translation provider (second party) the content and format of the information necessary to call the cloud translation service. Billing and management needs include fee calculations, funds management, calling policies, calling decisions, client or terminal or user management, etc. Specifically, for the content and format of cloud translation calling information, please refer to the above examples and related descriptions. specifically,
wherein, for the relevant provision method in step S6 (providing the cloud translation calling information or part of the information), as well as the content and format of the cloud translation calling information or part of the information, please refer to the above description. Specifically, providing cloud translation calling information or part of the information may be providing cloud translation calling information or part of the information a third party; The cloud translation calling information or part of the information provided by the third party may be the cloud translation calling information or part of the information provided by the third party server or network platform. The providing cloud translation calling information or part of the information (by (third party) can be provided through providing devices (such as sending devices, communication devices, communication modules, interface modules, calling interfaces, etc. and devices, etc.), see (Fig. 5A to Fig. 5C). Specifically, the cloud translation calling information or part of the information may include account information of one cloud translation service, or may include account information of multiple cloud translation services.

Specifically, cloud translation calling information may include: name of cloud translation provider, website of cloud translation, account name of cloud translation, account code of cloud translation, password of cloud translation, unit price of cloud translation, or part of them; cloud translation calling information may also include user account information (registration information), user fund (balance) information, user status information, etc. (registered with a third party) Specifically, for example, a user becomes a third-party user (or third-party member) by registering on a third-party (platform), thus forming a third-party user account, It can contain one or more fund accounts, and can recharge the fund accounts.

The funds (balance) in the fund account can be used to call the above cloud translation service, There can be one or more cloud translation services. That is to say, multiple cloud translation services can be called with one third-party user account and/or fund account.

More information about cloud translation calling information can be found in the above description. Wherein, after step S6, the above-mentioned step S2 or S20 (calling cloud translation service according to the cloud translation calling information provided by the third party) can be executed next. For details, please refer to the relevant description of the above-mentioned steps S2 and S20. For the definitions and/or features involved in the above cloud translation calling information providing method, please refer to the above definition and description of the same content. Relevant extensions and descriptions can be introduced into this method. For specific examples, please refer to the example of the cloud translation calling information acquisition step described in the previous section "Cloud translation calling method - client or terminal". Certainly, according to some embodiments of the present application, the cloud translation calling information provider may also proactively provide the cloud translation calling information or part of the information to the user or client or terminal. Specifically, the server end or server can use various technologies (polling, long polling, or WebSocket) or use various means (cookies) to issue or distribute cloud translation calling information or part of it, or use JS (JavaScript), AJAX "Asynchronous JavaScript and XML" (asynchronous JavaScript and XML) and other technologies.

### [Cloud translation calling device]

According to the third aspect of the present application, a cloud translation calling device is provided. The cloud translation calling device according to some embodiments of the present application uses the cloud translation calling method described above.

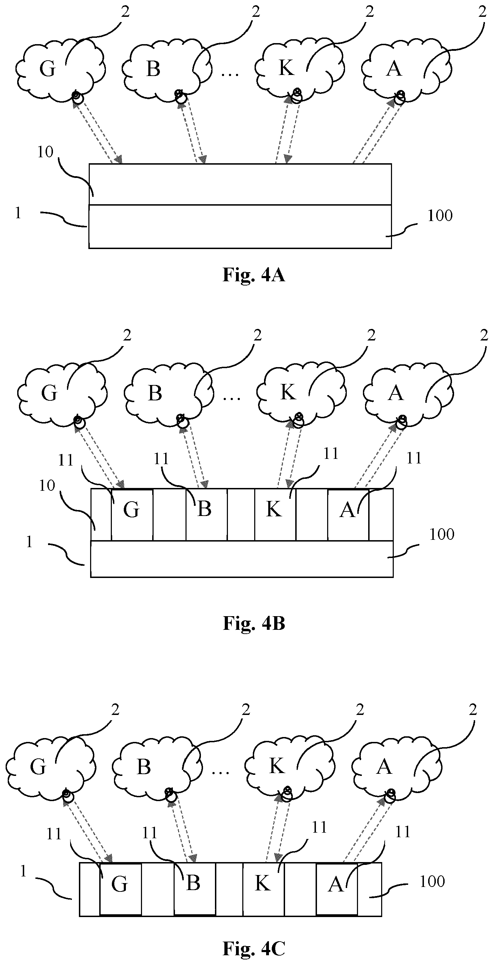

Specifically, according to the cloud translation calling device of the present application, the cloud translation calling method described above is used to call the cloud translation service according to the cloud translation calling information or part of the information described above. The following describes an apparatus for calling cloud translation according to some embodiments of the present application with reference to FIG. 4A and FIG. 4C . The cloud translation calling device is represented by 1 as a whole, which is set to call the cloud translation service according to the cloud translation calling information or part of the information;

Alternatively it comprises: the cloud translation module 10, configured to call the cloud translation service according to the cloud translation calling information or part of the information.

The cloud translation calling device 1 or the cloud translation module 10 therein may be an application programming interface (API) module. In particular, the cloud translation calling device 1 or the cloud translation module 10 in it is configured to use the cloud translation calling information provided by the third party 3 or part of the information to directly call the cloud translation service to the cloud translation provider 2;

Further, the cloud translation service result returned from the cloud translation provider 2 is received.

The cloud translation calling device 1 or the cloud translation module 10 therein can be configured to call one or more cloud translation services at the same time. The cloud translation calling information or part of the information can be configured to include the account information of one cloud translation engine, or can be configured to include the account information of multiple cloud translation engines. In Figure 4A and Figure 4B, several cloud translation services (engines) are listed: Google Translation (G), Baidu Translation (B), Kezhuan Xiaofei (K) and Aitrans Online (A), etc. Each cloud translation service (engine) can be one server or multiple servers; It can also be a cloud disk (such as a part of cloud space). Please refer to the relevant description above for details about cloud translation calling information or part of the information. According to the cloud translation calling device in some embodiments of the present application, the cloud translation calling device can be translation software, auxiliary translation software, application programs, modules embedded in applications, clients, terminals, terminal equipment, electronic equipment, or integrated into other modular device in the device. The cloud translation calling device according to some embodiments of the present application may also be a server. Further, the device or cloud translation module that calls cloud translation obtains cloud translation calling information or part of it from a third party or acquires cloud translation calling information or part of it from a third party. The cloud translation calling information or part of the information acquisition methods may include manual acquisition, SMS, email, instant messaging, etc. For example, cloud translation calling information or part of it can be downloaded from the server.

For more details, please refer to the description of cloud translation calling information or the ways and method of providing part of the information.

If the third party provides cloud translation calling information or part of the information in a certain way or method, the user side will receive or obtain it in a corresponding way or method. The cloud translation calling device according to some embodiments of the present application can use HTTP and Socket (such as WinSocket, WebSocket, etc.) technical methods to access or communicate with the cloud translation account provider (server or server). Various means (such as cookies) to obtain cloud translation calling information or part of the information can be also used, and also AJAX "Asynchronous JavaScript and XML" (asynchronous JavaScript and XML) technology for interactive communication and transmission and/or acquisition information can be used. The cloud translation calling device according to some embodiments of the present application, wherein, the cloud translation module 10 is pre-set in the device 1 for calling cloud translation, or downloaded and installed by the user to the device 1 for calling cloud translation, or downloaded from a server and installed manually or automatically in the device 1 for calling cloud translation. The cloud translation calling device according to some embodiments of the present application, wherein, the cloud translation calling information or part of the information can be preset in the cloud translation calling device 1 or the cloud translation module 10 therein (see FIG. 4A and FIG. 4B ).

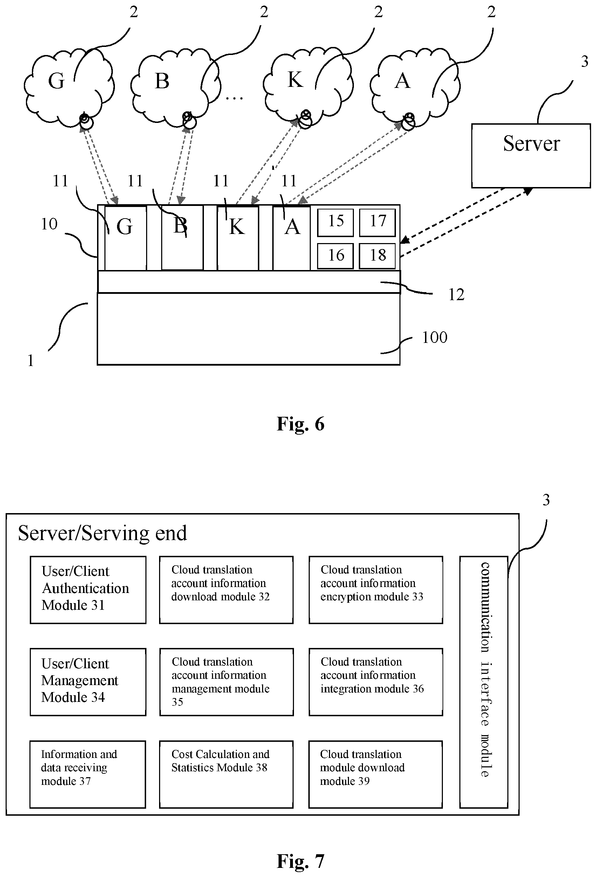

Either it can be obtained by the user from a third party 3 and input or sent to the cloud translation calling device 1 or cloud translation module 10 (see Figures 5A to 5D), or downloaded by the cloud translation calling device 1 (or client or terminal device) or the cloud translation module 10 from the server (see FIG. 6 ). The cloud translation calling device according to some embodiments of the present application,

wherein, the cloud translation calling device 1 or the cloud translation module 10 can call one or more cloud translation services at the same time. Referring to FIG. 4B below, the cloud translation calling device according to some embodiments of the present application is described.

Wherein, the cloud translation calling device 1 or the cloud translation module 10 may include one or more cloud translation interface sub-modules 11 (API modules). The cloud translation interface sub-module 11 can be used to call one or more cloud translation services; Or one cloud translation interface sub-module 11 corresponds to one cloud translation service.

As shown in Figure 4B, several cloud translation interface sub-modules11 are listed:
Google translation interface sub-module (G), Baidu translation interface sub-module (B), Kezhuan Xiaofei interface sub-module (K) and Aitrans interface online sub-module (A), etc. It should be noted that the cloud translation module 10 does not necessarily have to be equipped with various cloud translation interface sub-modules 11 , and the cloud translation module 10 itself can be designed or configured to call (simultaneously) call multiple cloud translation services. Referring to FIG. 4C , the cloud translation calling device according to some embodiments of the present application itself has the function and structure of the above-mentioned cloud translation module 10 , so the cloud translation module 10 does not need to be set or configured. Specifically, wherein, the cloud translation calling device 1 may include one or more cloud translation interface sub-modules 11 (API modules). According to the cloud translation calling device in some embodiments of the present application, the cloud translation calling information or part of the information conforms to the API interface specification specified by the cloud translation provider. Each cloud translation interface sub-module conforms to the API interface specification provided by the corresponding cloud translation provider. The device for calling cloud translation according to some embodiments of the present application,

Wherein, it further comprises an auxiliary module 100 for receiving or acquiring content to be translated and/or displaying translation results, as well as other related functions. When the cloud translation calling device of the present application is embedded in other applications (programs) or devices, the main application (program) module or other modules in it, or a certain module or unit in the device can obtain the content to be translated and /or display translation results. Further, it comprises receiving or acquiring means for receiving or acquiring the content to be translated;

As shown in FIG. 5A to FIG. 5D , according to some embodiments of the present application, the device for calling cloud translation, wherein the cloud translation calling information (including the cloud translation account information obtained by establishing cloud translation accounts by the third party 3 with multiple cloud translation provider parties or providers (G, B, K, A) 2), is provided to a user, client or terminal 1 through a device or means 300.

The user inputs it into the cloud translation calling device 1 or the cloud translation module 10 therein. The way of providing may be one by one or in batches. The cloud translation calling device 1 or the cloud translation module 10 may include one or more cloud translation interface sub-modules 11 (API modules) for calling various cloud translation services. Cloud translation calling information or cloud translation account information can be (respectively) directly input into the cloud translation interface sub-module 11 , as shown in FIG. 5B .

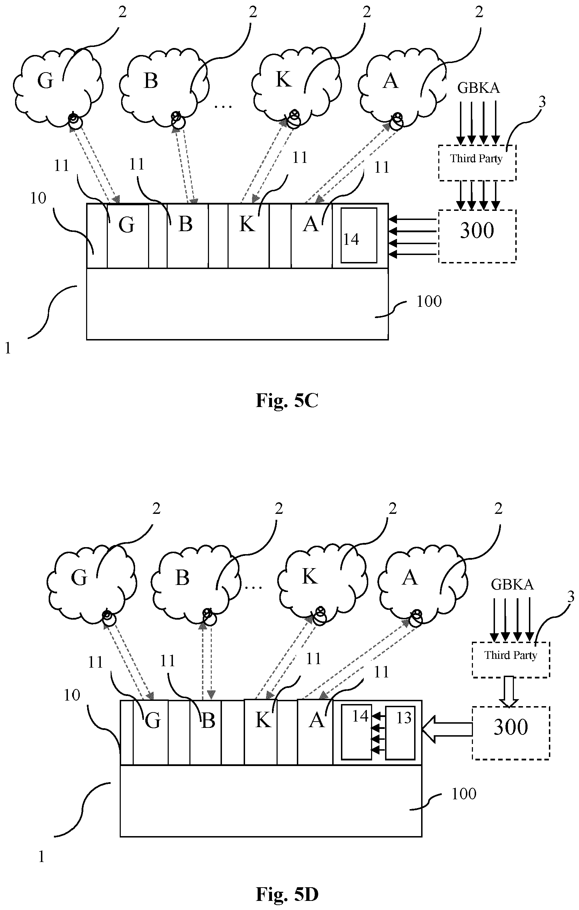

Referring to FIG. 5C, the cloud translation calling device according to some embodiments of the present application is now described, wherein, the cloud translation calling device 1 or the cloud translation module 10 further comprises a decryption module 14 for decrypting the cloud translation calling information or part of the information. Since cloud translation calling information or part of it may be stolen and embezzled during the process of providing and/or transmitting it, it is necessary to encrypt cloud translation calling information or part of it. Encryption and decryption technology can adopt various technologies at present.

Encryption and decryption can also be understood or extended as transformation and inverse transformation. Referring to FIG. 5D, the cloud translation calling device according to some embodiments of the present application is now described,

wherein, the cloud translation calling device 1 or the cloud translation module 10 further comprises an analysis module 13 for analyzing cloud translation calling information. For the case of providing multiple cloud translation services (engines), the corresponding multiple cloud translation calling information or cloud translation account information can be provided and/or transmitted one by one, or can be packaged together and provided and/or transmitted. Encapsulation can be for all parts of the cloud translation calling information, or only for part of the information, such as basic information (see cloud translation calling information example 2). For the encapsulated multiple cloud translation service account information, before calling the cloud translation service, it is necessary to parse out the information of each cloud translation service account. As shown in the figure, the information of multiple cloud translation accounts established by a third party 3 with multiple cloud translation provider parties or providers (G, B, K, A) 2 are packaged together, and provided to user, client or terminal1.

The encapsulated multiple cloud translation calling information can also be regarded as one cloud translation calling information. Further, the parsing module 13 can also be used to parse each part included in a cloud translation calling information, if necessary. Referring to FIG. 6, the device for calling cloud translation according to some embodiments of the present application will now be described, wherein, it further comprises a setting module 15 (see FIG. 11 ), which is used to select multiple cloud translation services and set priorities. For example, users can choose only one cloud translation service, such as Aitrans Online or Google. Users can also choose multiple cloud translation services, such as AiTrans Online or Google, and at the same time, they can set AiTrans Online as the first priority and Google as the second priority. Further, the device may be set to call the selected cloud translation service according to the priority order, and/or display the call result of the selected cloud translation service according to the priority order. Of course, multiple cloud translation service results can be displayed at the same time if necessary.

The device for calling cloud translation according to some embodiments of the present application, further, cludes a decision-making module 12 for judging whether the fund balance of the client or terminal or user is greater than or equal to the amount required for the current calling according to the current content to be translated, and if so, the calling is made, otherwise, the calling is not made; For example, when the user only chooses Aitrans online cloud translation service (the unit price is 3 yuan per thousand words), assuming that the current content to be translated is 1 thousand words, if the current user's fund balance is greater than or equal to 3 yuan, the current call is allowed, otherwise The current call is not allowed. Further, wherein, when calling multiple cloud translation services at the same time, the decision-making module judge whether the client or terminal or user fund balance is greater than or equal to the amount of funds required for calling one or more cloud translation services in the multiple cloud translation services according to the current content to be translated; if so, making the calling for said one or more cloud translation services, otherwise not making said calling; For example, when a user chooses Aitrans online cloud translation service (unit price is 3 yuan per thousand words) and Google cloud translation service (unit price is 4 yuan per thousand words), assuming that the current content to be translated is 1 thousand words, if the current user funds If the balance is greater than or equal to 7 yuan, the current call is allowed, otherwise the current call is not allowed; Further, it can be judged whether the current user fund balance is greater than or equal to the call fee of one of the selected cloud translations (such as Aitrans Online or Google). If it is greater than or equal to 3 yuan, it is allowed to call AiTrans Online Cloud Translation, otherwise it is not allowed related calling;

The above further judgment may be performed according to the priority order set by the user. For example, when the user chooses Aitrans Online (unit price is 3 yuan per thousand characters), Kezhuan Xiaofei (unit price is 5 yuan per thousand words) and Google Cloud Translation Service (unit price is 4 yuan per thousand words), assuming that the current content to be translated is 1,000 words, if the current user's fund balance is less than 12 yuan, it can further judge whether the current user's fund balance is greater than or equal to the calling fee of Aitrans Online (3 yuan), and if so, it is allowed to call Aitrans Online cloud translation, otherwise it is not allowed to call Aitrans Online; further, it can be judged whether the balance after subtracting the above 3 yuan is greater than or equal to the calling fee of Kezhuan Xiaofei (5 yuan), if so, it is allowed to call Kezhuan Xiaofeiyun translation, otherwise it is not allowed to call Kezhuan Xiaofei; further, in the case that it is not allowed to call Kezhuan Xiaofei, it can be judged whether the balance after subtracting the above 3 yuan is greater than or equal to Google's call fee (4 yuan), if it is, it is allowed to call Google Cloud Translation, otherwise it is not allowed to call Google Cloud translation. Several decision logics are listed above, and of course more other decision logics can also be used. The device for calling cloud translation according to some embodiments of the present application, wherein, it further comprises a billing module 16, which is used to bill the cloud translation calling each time or in batches; For example, when the number of words is 2,000 when calling Aitrans online cloud translation (the unit price is 3 yuan per 1,000 words), the cost of this cloud translation call is 2*3=6 yuan. Further wherein, the amount of the billing result is subtracted from the user's fund balance; For example, after the above cloud translation calling, 6 yuan is subtracted from the user's fund balance A, that is, the user's fund balance A is reduced by 6 yuan. The device for calling cloud translation according to some embodiments of the present application,

wherein, it further comprises an uploading module 18, which is used to upload the content and data of calling cloud translation, billing result information and/or user fund balance information to the server each time or in batches. For example, in the above example, data such as (to be) translated content, 2,000 words, Aitrans Online, unit price of 3 yuan per thousand words, fee of 6 yuan, and the latest balance A are uploaded to the server. The device for calling cloud translation according to some embodiments of the present application, wherein, a recording module 17 is further included, which is used to record the content and data of calling cloud translation, billing result information, user fund balance information and/or upload information each time or in batches. For example, in the above example, information and data such as (to be) translated content, 2,000 words, Aitrans Online, unit price 3 yuan per 1,000 words, fee 6 yuan, latest balance A, and whether the upload was successful are recorded and saved.

The cloud translation calling device according to the present application can be a client or a terminal, translation software, auxiliary translation software, application programs, modules embedded in applications, or any electronic equipment, including mobile phones, tablet computers, PCs , wearable equipment, etc., or a modular device integrated into an electronic device, or a server, a computer system, or a network platform system, etc. Anyone who uses, provides, configures, and sets the device of the present application, uses, provides, configures, and sets the device of the present application on various devices such as various computers, various terminal devices, various servers, etc., manufactures, sells, uses, and provides the above-mentioned various devices provided or configured with the device according to the present application are all within the scope of protection of the present application.

### [Cloud translation calling device - client or terminal]

In the case where the above-mentioned cloud translation calling device is a client or terminal, according to some embodiments of the present application, the client or terminal calling cloud translation calls the cloud translation service according to the cloud translation calling information or part of the information; Alternatively, a cloud translation module 10 is included, and the cloud translation module 10 calls the cloud translation service according to the cloud translation calling information or part of the information. Further, calling the cloud translation service is a direct calling the cloud translation service from the client or terminal to the cloud translation service party.

In some embodiments, the cloud translation module, the cloud translation interface sub-module, the cloud translation calling information or part of the information is obtained from a third party (by the user), or is downloaded by the client or terminal from a third party or a third party server. In some embodiments, the cloud translation module 10 or cloud translation interface sub-module 11 is pre-set in the client or terminal 1 (or the client or terminal and the cloud translation module are set as an integrated structure), and in which cloud translation calling information or part of the information can be preset or preset.

In some embodiments, the cloud translation module 10 or the cloud translation interface sub-module 11 is downloaded and installed (if necessary) by the user.

Specifically, the user makes a request to a third party, and when the third party receives the request, it provides the cloud translation module 10 or the cloud translation interface sub-module 11 to the user through text messages, emails, instant messaging or web pages, etc. Module 10 or cloud translation interface sub-module 11 is installed in the client or terminal 1. In some embodiments, the cloud translation module 10 or cloud translation interface sub-module 11 is downloaded and installed (if necessary) by the client or terminal 1 from the server end or server. Specifically, the cloud translation module 10 or the cloud translation interface sub-module 11 can be downloaded and installed (if necessary) before using the client or terminal or the cloud translation module therein.

For example, the client or terminal sends a request for downloading the cloud translation module or cloud translation interface sub-module to the provider of the cloud translation module or cloud translation interface sub-module, and receives the cloud translation module or cloud translation interface sub-module provided by the provider, to complete the download of the cloud translation module or the cloud translation interface sub-module;

If installation is required, the cloud translation module or cloud translation interface sub-module is installed on the client or terminal calling cloud translation when the user's installation operation is detected by the client or terminal calling cloud translation detects or automatically.

In some embodiments, the cloud translation module or the cloud translation interface sub-module is actively delivered by the provider. Specifically, the cloud translation module or the cloud translation interface sub-module can be used as an update data package, and when it is detected that the client or terminal that calls the cloud translation needs to update the cloud translation module or the cloud translation interface sub-module, the user is prompted to download and update information, so that users can determine whether to download and install (if necessary) according to the prompt information; Or directly allow the client or terminal to perform automatic download and update operations.

In some embodiments, the cloud translation calling information or part of the information is preset in the client or terminal 1 or the cloud translation module 10 or the cloud translation interface sub-module 11. Through this setting, there is no need to perform the acquisition or downloading of cloud translation calling information or part of the information to achieve the purpose of calling the cloud translation service, which simplifies the operation steps of the cloud translation service and improves the efficiency of calling the cloud translation service. In some embodiments, the cloud translation calling information or part of the information is obtained by the user from a third party and input into the client or terminal 1 or the cloud translation module 10, or downloaded from the server by the client or terminal 1. It can also be that part of the information in the cloud translation account is preset, and other part of the information is obtained through input or download.

Specifically, the client or terminal can obtain the cloud translation calling information or part of the information through the input window; When the third party receives the request for cloud translation calling information, it will provide the cloud translation calling information or part of the information to the user through SMS, email, instant messaging, etc. At this time, the user will receive the cloud translation calling information or part of the information , enter it into the window (validating if necessary). Specifically, when a third party or a third-party server detects the user's request for cloud translation calling information, it can provide the cloud translation calling information or part of the information to the user or client or terminal through SMS, instant messaging, email, etc. or in the form of a communication interface.

Specifically, the cloud translation calling information or part of the information is downloaded from the server by the client or terminal.

For example, the client or terminal sends a request to the server to obtain cloud translation calling information, and obtains the cloud translation calling information or part of the information returned by the server. For more descriptions of cloud translation calling information or part of the information, please refer to the relevant description above. The above description of "cloud translation calling method - client or terminal" can also be referenced here. In some embodiments, the cloud translation calling conforms to the API interface specification provided by the cloud translation provider. Through the operations of the above-mentioned embodiments, when the client or terminal calls the cloud translation service, the purpose of calling the cloud translation service can be realized without any additional operation by the user. In the above-mentioned embodiment of client calling cloud translation, the cloud translation module directly calls multiple cloud translation services at the same time. When applied, the cloud translation calling information or part of the information may include account information of one or more cloud translation services. Therefore, the cloud translation module or the cloud translation interface sub-module calls the cloud translation service according to the cloud translation calling information or part of the information , one or several cloud translation services can be called at the same time.

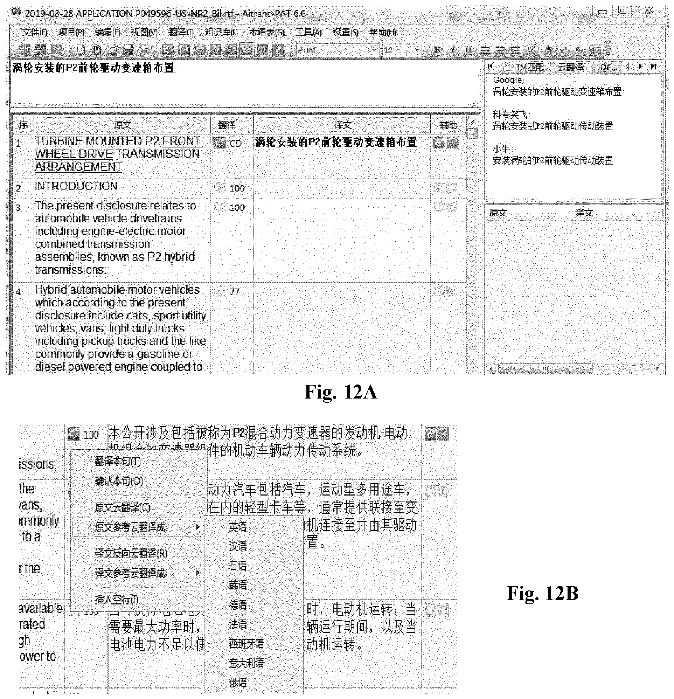

Specifically, the client or terminal that calls cloud translation is generally equipped with a "translation" control, and when it detects the user's operation on the "translation" control, it calls the cloud translation service according to the cloud translation calling information or part of the information. Figures 12A-12C show an example of translation software (client) - Aitrans Intelligent CAT. For details, please refer to the "cloud translation" button (e) shown in Figure 12A. When this button is clicked, the cloud translation module obtains the original text in the original text grid on the left, and calls the cloud translation service according to the cloud translation calling information or part of the information. The cloud translation settings are Google, Mavericks, and Kezhuan Xiaofei (see Figure 11), so the cloud translation results returned by these three engines are displayed in the cloud translation result display area.

In addition, because Google is the first choice, the cloud translation results returned by Google directly enter the corresponding translation grid.

Furthermore, since the original language and target language information are included when requesting or calling cloud translation, operations such as reverse cloud translation of the translated text, reference of the original text to cloud translation, and translation of the translated text of cloud translation can be easily performed.

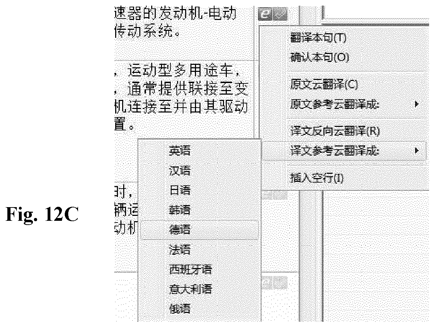

Right-click the selected row, such as the first row, to pop up the operation menu, as shown in Figure 12B and 12C, select the target language to perform related operations such as reverse cloud translation, original text reference cloud translation, translation reference cloud translation, etc., and the obtained corresponding cloud translation results can also be displayed in the cloud translation result display area.

Through the analysis of these reverse cloud translation and reference cloud translation results, the cloud translation results can be evaluated and reviewed, so as to further improve the translation quality. According to some embodiments of the present application, the cloud translation calling client or terminal can use HTTP and Socket (such as WinSocket, WebSocket, etc.) technology to access or communicate with the cloud translation account provider (server or server). It is also possible to save and obtain cloud translation calling information or part of it through various means (such as cookies, configuration files, etc.), or use JS (JavaScript), AJAX "Asynchronous JavaScript and XML" (asynchronous JavaScript and XML) ) and other technologies to communicate interactively and transmit and/or obtain information.

### [Servers]

According to the fourth aspect of the present application, it relates to a server for cloud translation calling, cloud translation calling information provision, related management and services.

### [Server, used to provide cloud translation calling information and services]

A server according to some embodiments of the present application,
wherein: The server is used to provide cloud translation calling information, billing and/or provide related services, and the cloud translation calling information is used to call cloud translation services.

The cloud translation calling information or part of the information is cloud translation calling information or part of the information provided by a cloud translation calling information provider or a third party; Or the cloud translation calling information comprises the information or part of the information obtained by establishing an account with the cloud translation provider for calling the cloud translation service provided by the cloud translation provider.

Further, the cloud translation calling information comprises basic information and additional information; alternatively, the cloud translation calling information or part of the information is used to call one or more cloud translation services or comprises information used to call one or more cloud translation services. For details about the cloud translation calling information, please refer to the above description. The related services include user management, fund management, account recharge, data statistics and management, etc. A server according to some embodiments of the present application, wherein, the server is used to provide one or more clients or users with cloud translation calling information or part of the information, and receive and store relevant data and information about calling cloud translation uploaded by the one or more clients or users; further, the account information of the client or user is stored, and the client or user with cloud translation calling information or part of the information, account information and/or capital information are provided according to the account information; further, the cloud translation calling information or part of the information is obtained by the user online, or provided to the user by email or short message, or downloaded by the client or terminal. According to some embodiments of the present application, the server provide cloud translation account information or part of the information, which is obtained by the user on the Internet and input to the client or terminal device, or Downloaded by the client or terminal. Specifically, the server provides the cloud translation calling information or part of the information to the user in the form of a web page.

According to the server for cloud translation calling according to some embodiments of the present application, when the server obtains the download request for cloud translation calling information sent by the user through the website, it will Send cloud translation calling information or part of it according to the contact information reserved by the user through the website (such as mobile phone number, email address). Specifically, when the server obtains the download request for the cloud translation calling information sent by the client or the terminal, it sends the cloud translation calling information or part of the information to the client or the terminal. For more information about cloud translation calls or part of them, please refer to the above description. The server according to some embodiments of the present application can be used to provide cloud translation calling information or part of the information to multiple users, clients or terminal devices, and receive and store the calling cloud translation uploaded by multiple users, clients or terminals data and information, etc.

Specifically, the server can provide cloud translation calling information or part of the information to multiple clients or users according to polling, broadcasting or demand.

For example, after detecting the download request sent by a client or user through the network, the server provides the requesting client or user with cloud translation calling information or part of the information. In some embodiments, the server stores the account information of the client or the user, and provides the corresponding client or user with the cloud translation calling information matching the account information or part of the information according to the account information.

Specifically, the client or user's account information may include account level, fund information, consumption records, contact information, and the like. Wherein, different account information can correspond to cloud translation account information with different permissions.

Specifically, when the server receives the download request, it can query according to the account information of the client or user included in the download request, so as to allocate the cloud translation calling information or part of the information matching the account information.

In some embodiments, the server for providing cloud translation calling information and services stores the (platform) account information of the client or terminal or user, and provides the client or user with cloud translation calling information, account information and and/or funding information or portions thereof. A platform account information can correspond to a user (party) (see the description above), and a user (party) can own or have one or more clients or terminals;

Or one platform account information can be used on one or more clients or terminals. The client can be installed on a computer or on a terminal device. A client can be logged in and used by only one user (party), or can be logged in and used by multiple users (party).

The above server can be one server or multiple servers.

It can also be a cloud disk (such as a part of cloud space). The aforementioned server may also be a server, such as a server, service program or service module set in a server or network space or network platform. Referring to FIG. 7, a server for calling cloud translation according to some embodiments of the present application is now described, wherein, server 3 comprises: The user/client authentication module 31 is used to receive the identity authentication request sent by the client or terminal or the user through the network, and use the account information of the client or terminal or user stored in the server to perform authentication. After the authentication is passed, it can directly return to the client or terminal or user-related information (such as recharge information, account balance information, etc.), cloud translation service-related information (such as price information, ranking information, etc.), and related cloud translation calling information or part of them (such as account number and keys, etc.);

Or notify the dedicated cloud translator to call the information downloading module 32 (described below) to perform the downloading operation. The cloud translation calling information downloading module 32 is used to download the cloud translation calling information or part of the information related to the client or terminal or user (such as account number and key, etc.). It is also possible to download user/client-related information (such as recharge information, account balance information, etc.), cloud translation service-related information (such as price information, ranking information, etc.), etc.

These information and data can be encrypted by Cloud Translator calling the information encryption module 33 (see the description below). This module can perform active downloading operations under the instructions of the server.

The cloud translation calling information encryption module 33 is used to encrypt the cloud translation calling information or part of the information (such as cloud translation account number and key, etc.) that needs to be downloaded. It is also possible to encrypt relevant information (such as recharge information, user fund balance information, etc.) of the client or terminal or the user's platform account that needs to be downloaded.

The encrypted information can be transmitted to the cloud translation calling information download module 32 or the user/client authentication module 31. Encryption technology can adopt various existing technologies. The user/client management module 34 is used to manage, maintain and update the platform user account of the user/client, such as account registration, login, query, fund account establishment and recharge, etc. The user/client management module 34 may also include a fund recharging sub-module to provide users with services of recharging funds into the fund account in various ways.

Cloud translation data management module 35, used for recording, counting and querying cloud translation data and information; The above management can be performed for users/clients, or for cloud translation providers. cloud translation calling information integration module 36, used to integrate or encapsulate multiple cloud translation calling information or part of the information (such as some basic information), so as to provide or download the encapsulated cloud translation calling information to users/clients; Specifically, it can be passed to the user/client in the form of a web page, or by cloud translation calling information download module 32.

The information and data receiving module 37 is used to receive cloud translation calling information and data sent from the client or terminal or user, such as the information, content and data of calling cloud translation, billing result information and/or user fund balance information, etc. ( See example described above). The cost calculation and statistics module 38 is used to calculate the cost of the uploaded information, content and data for calling cloud translation, and further subtract the calculated cost from the user's fund balance.

The cloud translation module downloading module 39 is used for downloading the cloud translation module (10) or the cloud translation interface sub-module (11). Specifically, when the server receives a request from a client or a terminal or a user, it downloads the cloud translation module (10) or the cloud translation interface sub-module (11), or the server actively initiates a download or update operation.

The storage and query module is used to store and query various related information in the server.

The above server structure is only an example, and the cloud translation calling server can also be configured according to other structures.

For example, wherein, the server comprises a communication interface module, using these interfaces, the server can communicate with the client or terminal or user, and complete various functions related to cloud translation calling, cloud translation calling information provision, related management and services. Specifically, the communication interface module may include the following interfaces.

Cloud translation calling information request download interface (A001), used for clients or terminals or users to send cloud translation calling information requests. After receiving the request, the server will return the corresponding cloud translation calling information or part of the information if the authentication is successful.

Cloud translation calling data and fee upload interface (C001), which is used for: the client or terminal or the user sends the successfully transferred cloud translation information, data and fees, and the server performs information and data storage or recording operations and fee deduction operations after receiving the information, data and fees.

User fund information download interface (M001), used for: sending the user's fund balance and recharge amount recorded on the server to the client or terminal or user. This interface can also be incorporated into the cloud translation calling information request download interface (A001) and/or the cloud translation call data and fee uploading interface (C001).

Cloud translation module download interface (B001), used to download cloud translation module (10) or cloud translation interface sub-module (11).

Specifically, the server downloads the cloud translation module (10) or the cloud translation interface sub-module (11) when receiving a request from the client or terminal or the user, or actively downloads or updates the server. In addition, servers can be divided into server 1 and server 2. For example, assume that server 1 is a server that provides cloud translation services, and server 2 is a server that manages clients.

The server according to some embodiments of the present application may be a third-party server, a server of a third-party, or a server belonging to a third party.

The server according to some embodiments of the present application can communicate with the cloud translation calling device (or client or terminal) by means of HTTP and Socket (such as WinSocket, WebSocket, etc.) technology.

It is also possible to obtain the information of the cloud translation calling device (or client or terminal) through various means (such as cookies), and technologies such as JS (JavaScript), AJAX "Asynchronous JavaScript and XML" (asynchronous JavaScript and XML) can also be used interactively communicate with the cloud translation calling device (or client or terminal) and transmit and/or obtain information.

### [Server, used to call cloud translation service]

According to some embodiments of the present application, a server for calling a cloud translation service is provided.

The server calls the cloud translation service according to the request.

Specifically, the server receives a cloud translation request from a user, client or terminal, calls one or more cloud translation services, and returns the obtained cloud translation result to the requesting party.

Wherein, the server may include a cloud translation module 10. The server or cloud translation module 10 may include one or more cloud translation interface sub-modules 11 (API modules).

The cloud translation module 10 or the cloud translation interface sub-module 11 can be used to call one or more cloud translation services.

Or a cloud translation interface sub-module 11 correspondingly calls a cloud translation service. In addition to realizing the cloud translation calling information configuration for calling one or more cloud translations, the server architecture can further include: Decision-making module 12, setting module 15, billing module 16, record storage module 17, etc. These modules may be similar to the corresponding modules in the above-mentioned cloud translation calling device, for details, please refer to the above description. Furthermore, the above-mentioned server also provides services related to calling cloud translation services (such as user management, fund management, account recharge, data statistics and management, etc.). Specifically, refer to FIG. 7, the above servers include following modules.
User/client authentication module 31;
Cloud translation calling information download module 32;
Cloud translation calling information encryption module 33;
User/client management module 34;
Cloud translation data management module 35;
Cloud translation calling information integration module 36;
Account recharging module 37, etc.

For the function definitions and descriptions of the above modules, refer to the relevant description above, and will not be repeated here. The server according to some embodiments of the present application may be a third-party server, a server of a third-party, or a server belonging to a third party. The server according to some embodiments of the present application can communicate with the cloud translation calling device (or client or terminal) by means of HTTP and Socket (such as WinSocket, WebSocket, etc.) technology. It is also possible to obtain the information of the cloud translation calling device (or client or terminal) through various means (such as cookies), and technologies such as JS (JavaScript), AJAX "Asynchronous JavaScript and XML" (asynchronous JavaScript and XML) can also be used interactively communicate with the cloud translation calling device (or client or terminal) and transmit and/or obtain information.

### [Cloud Translation Calling System 1]

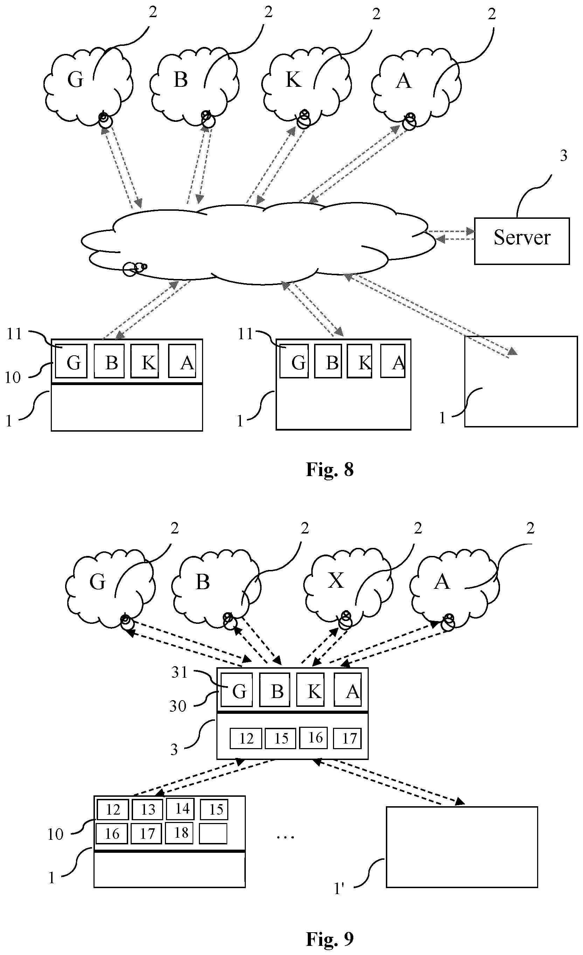

Now describe the cloud translation calling system provided by some embodiments according to the fifth aspect of the present application, which is used for calling, billing and managing cloud translation services according to the cloud translation calling information and according to the cloud translation calling method of the present application. As shown in Figure 8, the system comprises the followings.

Server 3, used to provide cloud translation calling information or part of the information. For the operation, function and structure of the server, please refer to the above description.

At least one client or terminal 1, used to use the cloud translation calling information or part of the information provided by the server to call the cloud translation service.

Specifically, it is used to directly call the cloud translation service to the cloud translation provider by using the cloud translation calling information or part of the information provided by the server.

For the operation, function and structure of the client or terminal 1, please refer to the above description of the cloud translation calling method and the cloud translation calling device. The specific structure of each client or terminal may be the same or different.

Further, the client or terminal 1 can calculate and count the cost of calling cloud translation; Control or decision-making of calling cloud translation can be made according to the fund account information (fund balance).

It can interact with the server through a communication interface, etc., so as to perform various management operations. According to some embodiments of the present application, wherein, the client or terminal device 1 has or is configured with a cloud translation module 10, and the cloud translation module uses the cloud translation calling information or part of the information provided by the server to call the cloud translation service. The cloud translation module 10 may be an application programming interface (API) module. In particular, the cloud translation module 10 in the client or terminal device 1 is configured to directly call the cloud translation service to the cloud translation provider 2 by using the cloud translation calling information or part of the information provided by the server. Further, the client or terminal device 1 or the cloud translation module 10 therein receives the cloud translation service result returned from the cloud translation provider 2 . The cloud translation module 10 can be preset in the client or terminal device 1 , downloaded and installed by the user into the client or terminal device 1 , or manually or automatically downloaded from the server and installed in the client or terminal device 1 .

According to the cloud translation calling system of some embodiments of the present application, wherein, the client or terminal device 1 or the cloud translation module 10 therein may include one or more cloud translation interface sub-modules 11 (API modules). The cloud translation interface sub-module 11 can be used to call one or more cloud translation services; Or a cloud translation interface sub-module 11 correspondingly calls a cloud translation service. The cloud translation interface sub-module 11 can be pre-set in the calling client or terminal device 1 or the cloud translation module 10 therein, or downloaded and installed by the user into the client or terminal device 1 or the cloud translation module 10 therein, or download from the server and install manually or automatically into the client or terminal device 1 or the cloud translation module 10 therein.

Each or various cloud translation interface sub-modules 11 can be downloaded, installed or configured into the client or terminal device 1 or the cloud translation module 10 therein at one time, in batches, individually, or one by one.

According to the cloud translation calling system of some embodiments of the present application, wherein, the client or terminal device 1 or the cloud translation module 10 therein or the cloud translation interface sub-module 11 therein can communicate with the server 3 through a network (such as the Internet). According to the cloud translation calling system of some embodiments of the present application, wherein, the client or terminal device 1 or its cloud translation module 10 or its cloud translation interface sub-module 11 can communicate with one or more cloud translation (engines) or cloud translation servers 2 through a network (such as the Internet) to call Cloud translation service. The cloud translation calling server can be one server or multiple servers; It can also be a cloud disk (such as a part of cloud space).

The cloud translation calling server can also be a kind of server, such as a server, service program or service module set in a server or network space or network platform. A system according to some embodiments of the application,

The server may be a third-party server, a server of third-party, or a server belong to a third-party. When applied, the cloud translation calling information or part of the information may include the account information of one or several cloud translation services. Therefore, the client can call one or several cloud translation services at the same time according to the cloud translation interface module.

Specifically, the client or terminal requests the server to download cloud translation calling information, and the client or terminal or the cloud translation interface module therein calls the cloud translation service according to the downloaded cloud translation calling information or part of the information. In some embodiments of the present application, the terminal may be an electronic device installed with a client, or may be an independent electronic device without a client installed. For example, if the terminal is installed with a client, the user can use the terminal to request the server to download cloud translation calling information;

If the client is not installed on the terminal, the user can use the terminal to log in to the website of the server and request to download the cloud translation calling information. In some embodiments, the cloud translation calling information or part of the information is obtained by the user online and input to the client or terminal, or downloaded by the client or terminal.

For more information about cloud translation calls or part of them, please refer to the above description. In some embodiments, the server provides cloud translation calling information or part of the information to multiple clients or multiple users, and receives and stores cloud translation calling data sent by multiple clients or multiple users.

For all the above-mentioned embodiments that include clients or terminals, the device 1 shown in Figures 4-6 may include a cloud translation interface sub-module, a decryption module, an analysis module, a decision-making module, a setting module, a billing module, a record storage module, Upload module and other functional modules. Wherein, the client or terminal 1 can store the data of calling cloud translation by or using the client or terminal 1 locally and/or send to the server 3 through the record storage module. Similarly, the server 3 can also receive and store the data and information for calling cloud translation sent by multiple clients or users.

The client or terminal 1 can send data to the server through the upload module according to preset upload conditions. When applying, the client or terminal 1 calculates and counts the cost of calling cloud translation through the billing module; The client or terminal 1 can also upload the information and data of calling cloud translation to the server 3 for calculation and statistics. Further, the client or terminal 1 can obtain the charging records issued by the server 3 .

Specifically, when the client or terminal 1 obtains the cloud translation calling information including the account information of multiple online translation engines, it analyzes through the analysis module to obtain the account information corresponding to each cloud translation engine, and calls the cloud translation service according to the called account information of the online translation engine. In the case that the cloud translation calling information is encrypted, it can be decrypted through the decryption module. According to some embodiments of the present application, the cloud translation calling system can use HTTP and Socket (such as WinSocket, WebSocket, etc.) technology to communicate between the cloud translation calling device (or client or terminal), the cloud translation provider (server) and /or Cloud Translation calling information providers (servers) for communication operations. It is also possible to use various means (such as cookies) to obtain the information of the cloud translation calling device (or client or terminal) and provide cloud translation calling information and/or provide cloud translation services, or use JS (JavaScript), AJAX" "Asynchronous JavaScript and XML" (asynchronous JavaScript and XML) or similar technologies for interactive communication between the above three or both and to transmit and/or obtain information.

### [Cloud Translation Calling System 2]

The cloud translation calling system provided by other embodiments according to the fifth aspect of the present application is now described, which is used for calling, charging and managing cloud translation services according to the cloud translation calling method of the present application. As shown in Figure 9, the system comprises: Cloud translation calling server, used to provide cloud translation services.

Specifically, the server receives a cloud translation request from a user, client or terminal for calling one or more cloud translation services, and returns the obtained cloud translation result to the requesting party. The above calling to the cloud translation service is a calling to the cloud translation service provider, so the server mentioned here can also be called an intermediate server or a proxy server.

In addition to realizing cloud translation calling information configuration, its architecture can further include: decision-making module 12, setting module 15, billing module 16, record storage module 17, etc., in order to manage and provide services to cloud translation callings and/or users. These management modules can be put on another server, a separate management server.

These modules may be similar to the corresponding modules in the above-mentioned cloud translation calling device. For the server, refer to the above-mentioned server for calling the cloud translation service. At least one client or terminal device 1 is used to call the cloud translation service according to (platform) account information (through the server 3 ). The client or terminal device 1 may also be the cloud translation calling device described above (see the above description for details). According to some embodiments of the present application, wherein, the client or terminal device 1 has or is configured with a cloud translation module 10, and the cloud translation module 10 calls the cloud translation service according to (platform) account information (via the server 3). The cloud translation module 10 can be pre-set in the client or terminal device 1 , and can also be downloaded from the server 3 and installed in the client or terminal device 1 . The cloud translation module 10 may be an application programming interface (API) module.

Further, the client or terminal device 1 or the cloud translation module 10 therein receives the cloud translation service result returned from the server 3 . According to some embodiments of the present application.

Wherein, the cloud translation calling system may include one or more browsers 1, and users can use the browsers to call the cloud translation service according to (platform) account information (via the server 3). According to some embodiments of the present application, wherein, the server 3 has or is configured with a cloud translation module 30, and the cloud translation module 30 may be similar to the cloud translation module 10 in the above-mentioned cloud translation calling device. The cloud translation module 30 responds to the request of the user or the client or the terminal device, calls the cloud translation service according to the user (platform) account information (including the fund account), the cloud translation calling setting, etc., and returns the cloud translation service result to the user or client or end device. The setting of cloud translation calling can be to call one or more cloud translation services at the same time.

It is also possible to prioritize multiple cloud translation services. According to the cloud translation calling system of some embodiments of the present application, wherein, the server 3 may include one or more cloud translation interface sub-modules 11 (API modules). The cloud translation interface sub-module 11 can be used to call one or more cloud translation services; Or a cloud translation interface sub-module 11 correspondingly calls a cloud translation service. A system according to some embodiments of the application, The server may be a third-party server, a server of a third-party , or a server belong to a third-party server.

According to the cloud translation calling system of some embodiments of the present application, wherein, the client or terminal device 1 or the cloud translation module 10 therein can communicate with the server 3 through a network (such as the Internet). The cloud translation calling server can be one server or multiple servers; It can also be a cloud disk (such as a part of cloud space).

The cloud translation calling server can also be a kind of server, such as a server, service program or service module set in a server or network space or network platform. According to some embodiments of the present application, the cloud translation calling system can adopt HTTP, socket socket (such as WinSocket, WebSocket, etc.) technical methods on the client or terminal (cloud translation calling device), cloud translation provider (server) and/or or communicate between cloud translation calling service parties (cloud translation calling server). It is also possible to obtain information on the client or terminal (cloud translation calling device) through various means (such as cookies) and provide or generate cloud translation calling information and/or provide cloud translation services, or use JS (JavaScript), AJAX "Asynchronous JavaScript and XML" (asynchronous JavaScript and XML) or similar technologies to communicate interactively between the above three or both and to transmit and/or obtain information. According to the cloud translation calling system of some embodiments of the present application,
wherein, the server may be a third-party server. Here, the first party is the "user side", which can be referred to as "user" for short. The "user side" is the user of the cloud translation calling method of the present application, which can be an individual, enterprise, entity, institution, etc.

### [Setting module]

Referring now to FIG. 11, an example of a setting module or a setting method in the present application will be described. It can be seen from the figure that there are multiple cloud translation services obtained from third parties (or third-party servers) (in order of ranking: Google, Kezhuan Xiaofei, Mavericks), the user selects Google, Kezhuan Xiaofei, Mavericks and other three items through the selection button (right arrow) in the dialog box. Users can also delete the selected cloud translation item through the deselect button (left arrow) in the dialog box. When the user selects multiple items, if need to move an item up or down (that is, adjust its priority), the buttons (up and down arrows) in the dialog box can be used to achieve.

Click the price description, you can see the unit price of each cloud translation service, of course, it can also be directly displayed in this dialog box, so that users can choose the desired or suitable cloud according to the unit price of each cloud translation service and/or cloud translation quality translation service.

Users can also consider the above ranking information to select cloud translation services and prioritize them. Figure 11 also shows the user's fund balance and the number of words that the fund balance can call a certain cloud translation service. Wherein, the available balance refers to the balance of the fund account of the user or client. This balance can be kept synchronized with the server through the communication interface. For example, if the balance of the server increases (for example, recharging), the server can transmit the new fund balance or recharging amount to the user or client.

### [Computer system]

According to another aspect of the present application, a computer system is provided. Referring to FIG. 10, the system 4 comprises a memory 410, a processor 400, and a computer program 420 stored in the memory and operable on the processor. When the computer program 420 is executed by the processor, the steps of any cloud translation calling method or cloud translation calling information providing method according to the embodiments of the present application are realized.

In addition, an embodiment of the present application also provides a computer-readable storage medium, on which a computer program is stored. When the computer program is executed by a processor, any one of the above-mentioned cloud translation calling methods according to the embodiments of the present application can be implemented. It should be noted that the above-mentioned computer-readable storage medium belongs to the same concept as the above-mentioned embodiment of the cloud translation calling method, and its specific implementation process is detailed in the method embodiment, and the technical features in the method embodiment are described in the device and computer-readable storage medium. All are applicable correspondingly, and will not be repeated here. Computer readable storage media may include: Any entity or device capable of carrying the computer program code, recording medium, U disk, mobile hard disk, magnetic disk, optical disk, computer memory, read-only memory (ROM, Read-Only Memory), random access memory (RAM, Random Access Memory), and software distribution media, etc.

Each functional module or functional unit in each embodiment of the present application may be integrated into one processing unit, or each unit may physically exist separately, or two or more modules or units may be integrated into one module or unit.

The above-mentioned integrated units can be implemented not only in the form of hardware, but also in the form of software function modules or units.

The above is a specific description of some embodiments of various aspects of the present application, but the present application is not limited to the above-mentioned embodiments and examples. Those skilled in the art can also make various embodiments without violating the spirit of the present application. These equivalent modifications or replacements shall be included within the scope defined by the claims of the present application. The features in the above-mentioned embodiments (including step features, device features, and the definitions and limitations therein, etc.) can be combined and combined in any way within the scope of the present application, and these combinations and combinations should also be included in the scope of claims defined in the present application.

## Claims

1. A cloud translation calling method, comprising:
receiving or obtaining content to be translated;
calling a cloud translation service based on cloud translation calling information or part of the information; wherein ,
the cloud translation calling information or part of the information is cloud translation calling information or part of the information provided by a cloud translation calling information provider or a third party; alternatively, the cloud translation calling information comprises basic information, and further comprises additional information; alternatively, the cloud translation calling information or part of the information is used to call one or more cloud translation services or comprises information used to call one or more cloud translation services.

2. The cloud translation calling method of claim 1,
wherein, the cloud translation calling information provider or the third party is any party other than the user party calling cloud translation and the cloud translation provider;
wherein, the calling for cloud translation service is a direct calling for cloud translation service; further, the calling for cloud translation service is a direct calling for cloud translation service to a cloud translation provider;
wherein, the cloud translation calling information or part of the information is preset;
wherein, the method further comprises receiving or obtaining cloud translation calling information; further, the receiving or obtaining cloud translation calling information means obtaining cloud translation calling information or part of it from a third party, or receiving cloud translation calling information or part of it provided by a third party;
wherein, the basic information comprises information for calling cloud translation to a cloud translation provider, and the additional information comprises information for management; further, the additional information comprises fund information or fund balance information of a client or terminal or user;
wherein, the cloud translation calling information or part of the information is provided with encryption;
wherein, the calling cloud translation service is calling multiple cloud translation services at the same time;
wherein, the cloud translation calling information or part of the information used to call multiple cloud translation services is packaged and provided together;
wherein, the method further comprises: receiving a result of the cloud translation service
wherein, the plurality of cloud translation services are selected and prioritized by the user; further, calling the selected cloud translation service according to the priority order, and/or displaying the calling results of the selected cloud translation services according to the priority order;
wherein, the basic information comprises a unit price of cloud translation, which is used to charge for calling cloud translation;
wherein, the calling cloud translation is billed on a per-time basis or in batches; further, subtracting the amount of the billing result from the user's fund balance; further, the billing is based on the cloud translation unit price and the amount of cloud translation content;
wherein, a decision is made according to the user's fund balance before calling cloud translation; further, the decision-making includes judging whether the fund balance of the client or terminal or user is greater than or equal to the amount required for the current calling according to the current content to be translated, and if so, the calling is made, otherwise, the calling is not made; further, wherein, when calling multiple cloud translation services at the same time, the decision-making includes judging whether the client or terminal or user fund balance is greater than or equal to the amount of funds required for calling one or more cloud translation services in the multiple cloud translation services according to the current content to be translated; if so, making the call to said one or more cloud translation services, otherwise not making said call; further, the client or terminal or user fund balance information is preset, or obtained through input, or obtained through downloading; further, the user fund balance information is encrypted; further, the user fund balance information is included in the cloud translation calling information;
wherein, the basic information further includes: name of cloud translation provider, website address or URL of cloud translation, account name of cloud translation, account code of cloud translation, password of cloud translation, unit price of cloud translation, or part of them; the additional information includes registration information, fund information, status information of the user account, or part of the information;
wherein, the user account is a user account at a third party; further, one user account can register multiple fund accounts; further, one user account can register the information of multiple clients or terminals; further, a user account or a fund account or a client or terminal can be used to call one or more cloud translation services;
wherein, the content and data of calling cloud translation, the billing result information, the user fund balance information, upload information, or part of the information are recorded each time or in batches;
wherein, the method is applied to a client or a terminal; further, the cloud translation calling information or part of the information is preset in the client or terminal; alternatively, the cloud translation calling information or part of the information is input into the client or terminal by the user; alternatively, the cloud translation calling information or part of the information is download into the client or terminal by the user;
further, the user fund balance information is preset in the client or terminal, or input into the client or terminal by the user, or downloaded from the server to the client or terminal;
wherein, the cloud translation calling information or part of the information is download from a server; further, the server is a third-party server;
wherein, the relevant information of the one or more cloud translation services is updated and provided by the third party or the third party server; further, the relevant information of the one or more cloud translation services is viewed, selected and/or entered by the user, or downloaded by the client or terminal, and is further available for the user to perform the selection and setting;
wherein, the information, content and data of calling cloud translation, the billing result, the user fund balance information, or part of the information are upload to the server each time or in batches;
wherein, the server transmits the user fund balance recorded and updated therein to the client or terminal;
wherein, the method is applied to a client or a terminal;

3. A cloud translation calling device, wherein,
the cloud translation calling device calls a cloud translation service according to cloud translation calling information or part of the information; alternatively, the cloud translation calling device comprises a cloud translation module, and the cloud translation module calls the cloud translation service according to the cloud translation calling information or part of the information; wherein, the cloud translation calling information is cloud translation calling information provided by the cloud translation calling information provider or a third party; alternatively, the cloud translation calling information includes basic information, and further includes additional information; alternatively, the cloud translation calling information or part of the information is used to call one or more cloud translation services or includes information used to call one or more cloud translation services.

4. The cloud translation calling device according to claim 3, wherein, further the cloud translation calling module comprises a cloud translation interface sub-module, and the cloud translation interface sub-module calls the cloud translation service according to the cloud translation calling information or part of the information; further, the cloud translation calling device or the cloud translation module or the cloud translation interface sub-module directly calls the cloud translation service or directly calls the cloud translation service to a cloud translation provider according to the cloud translation calling information or part of the information provided by the cloud translation calling information provider or a third party; and receiving a result of the cloud translation service; further wherein, the cloud translation calling device or the cloud translation module directly calls multiple cloud translation services at the same time; further, the device comprises receiving or acquiring means for receiving or acquiring the content to be translated; further, the device is a translation software, an auxiliary translation software, an application program, a module embedded in application, a client, a terminal device, an electronic device, or a module device integrated into other devices; wherein, the cloud translation calling device or the cloud translation module acquires cloud translation calling information; further, the cloud translation calling device or the cloud translation module obtains cloud translation calling information from a third party or obtains cloud translation calling information provided by a third party;
wherein, the cloud translation module is preset in the cloud translation calling device, or downloaded by the user, or downloaded from the server by the device; further, the cloud translation calling information comprises basic information and additional information, wherein, the basic information includes information for calling cloud translation from a cloud translation provider, and the additional information includes information for management; further, the cloud translation calling information is one cloud translation calling information, or includes multiple cloud translation calling information; alternatively, the cloud translation calling information or part of the information is used to call one or more cloud translation services or includes information used to call one or more cloud translation services; the basic information includes: name of cloud translation provider, website of cloud translation, account name of cloud translation, user code of cloud translation, password of cloud translation, unit price of cloud translation, or part of them; the additional information comprises registration information, fund information, status information of the user account, or part of the information; wherein, the user account is a user account at a third party; further wherein, one user account can register multiple fund accounts; further, one user account can register the information of multiple cloud translation calling devices; further wherein, a user account or a fund account or a cloud translation calling devices can be used to call one or more cloud translation services; further, the cloud translation calling information or part of the information is preset in the device or the cloud translation module or the cloud translation interface sub-module, or is obtained by the user from a third party and input into the device or the cloud translation module or the cloud translation interface sub-module; or downloaded from the server by the device or the cloud translation module or the cloud translation interface sub-module; further wherein, a decryption module is comprised, which is used to decrypt the cloud translation calling information or part of the information; wherein, further a parsing module for parsing the cloud translation calling information is comprised; wherein, further a setting module is comprised, which is used to select multiple cloud translation services and set priorities; further, the device or the cloud translation module is set or configured to call the selected cloud translation service according to the priority order, and/or display the calling result of the selected cloud translation service according to the priority order; further, the cloud translation module comprises one or more cloud translation interface sub-modules for calling corresponding cloud translation services;
further, a decision-making module is comprised for judging whether the fund balance of the client or terminal or user is greater than or equal to the amount required for the current calling according to the current content to be translated, and if so, the calling is made, otherwise, the calling is not made; further, wherein, when calling multiple cloud translation services at the same time, the decision-making module judges whether the client or terminal or user fund balance is greater than or equal to the amount of funds required for calling one or more cloud translation services in the multiple cloud translation services according to the current content to be translated; if so, making the calling for said one or more cloud translation services, otherwise not making said calling; wherein, further a billing module is comprised, which is used to bill the cloud translation calling each time or in batches; further wherein, the amount of the billing result is subtracted from the user's fund balance; wherein, a upload module is comprised, for uploading the information, content and data of calling cloud translation, the billing result, the user fund balance information, or part of the information to the server each time or in batches; wherein, a record module is comprised, for recording the information, content and data of calling cloud translation, the billing result, the user fund balance information, upload information, or part of the information;

5. A method for providing cloud translation calling information, comprising:
creating a cloud translation account;
providing cloud translation calling information or part of the information to a user party or user; wherein ,
the cloud translation calling information or part of the information is used to call a cloud translation service.

6. The method for providing cloud translation calling information according to claim 5,
wherein, the creating a cloud translation account is that a cloud translation calling information provider or a third party establish a cloud translation account with the cloud translation provider; wherein, the establishment of the cloud translation account is that the cloud translation calling information provider or the third party, in own name, establish a cloud translation account with the cloud translation provider;
wherein, the cloud translation provider is one or more; further, the cloud translation calling information is used to call one or more cloud translation services or includes information used to call one or more cloud translation services;
further, the cloud translation calling information comprises basic information and additional information; further, the basic information includes information for calling cloud translation to a cloud translation provider, and the additional information includes information for management; further, the additional information includes user account information, user fund information or user fund balance information, status information or part of the information; further, the basic information further includes: name of cloud translation provider, website of cloud translation, account name of cloud translation, account code of cloud translation, password of cloud translation, unit price of cloud translation, or part of them; wherein, the unit price of cloud translation is used to charge for calling cloud translation;
wherein, the cloud translation calling information or part of the information is provided with encryption;
wherein, the cloud translation calling information or part of the information used to call multiple cloud translation services is packaged and provided together.

7. A server, wherein, the server is used to provide cloud translation calling information, the cloud translation calling information or part of the information is cloud translation calling information or part of the information provided by a cloud translation calling information provider or a third party; alternatively the cloud translation calling information comprises information or part of the information obtained by establishing an account with the cloud translation provider for calling the cloud translation service provided by the cloud translation provider; alternatively, the cloud translation calling information comprises basic information and additional information; alternatively, the cloud translation calling information or part of the information is used to call one or more cloud translation services or includes information used to call one or more cloud translation services; or the server calls the cloud translation service according to a request.

8. The server according to claim 7,
wherein, the basic information includes information for calling cloud translation service from the cloud translation provider; wherein, the additional information includes information for management; further, the additional information includes user account information, user fund information or user fund balance information, client or terminal fund balance information, status information or part of the information; further, the basic information includes: name of cloud translation provider, website of cloud translation, account name of cloud translation, account code of cloud translation, password of cloud translation, unit price of cloud translation, or part of them; wherein, the unit price of cloud translation is used to charge for calling cloud translation;
wherein, the cloud translation calling information or part of the information is provided with encryption;
wherein, the cloud translation calling information or part of the information used to call multiple cloud translation services is packaged and provided together;
wherein, the server provides the cloud translation calling information or part of the information to one or more clients or terminals or one or more users;
wherein, the cloud translation calling information is obtained by the user online, or provided to the user by email or short message, or downloaded by the client or terminal;
wherein, the server provides the cloud translation calling information or part of the information after receiving a request from the client or the terminal or the user;
wherein, the server stores the account information of the client or terminal or user, and provides the client or terminal or user with the cloud translation calling information, the account information, fund information or part of the information according to the account information; further, one client or terminal or user's account can register multiple fund accounts; further, one user account can register the information of multiple clients or terminals; further, a user account or a fund account or a client or terminal can be used to call one or more cloud translation services;
further, the cloud translation calling information is obtained by the user online, or provided to the user by email or short message, or downloaded by the client or terminal;
wherein, the server also provides relevant information of one or more cloud translation services; further, the relevant information of the one or more cloud translation services is viewed, selected and/or entered by the user, or downloaded by the client or terminal, and is further available for the user to perform the selection and setting;
wherein, the server receives and stores relevant data and information for calling the cloud translation uploaded by the client or terminal or user;
wherein, the server transmits the client or terminal or user fund balance information recorded and updated therein to the client or terminal;
wherein, the server further comprises:
a receiving module, used to receive request information for cloud translation calling information, cloud translation calling information and data, billing result information, and user fund balance information sent from the client or terminal or user;
a user/client authentication module, using the account information of the client or terminal or user stored in the server to authenticate the identity of the client or terminal or user sending the request or uploading data;
a cloud translation calling information download module, used to download cloud translation calling information or part of the information related to the client or terminal or user;
a cloud translation calling information encryption module, used to encrypt the cloud translation calling information or part of the information that needs to be downloaded;
a user/client management module, used to manage, maintain and update client or terminal or user account information, such as account registration, login, query, establishment and recharge of fund accounts, etc.;
a cloud translation data management module, used for recording, statistics, query, etc. of cloud translation data and information; further, which is used to carry out the above-mentioned management for clients or terminals or users, or for cloud translation providers;
a cloud translation calling information integration module, used to integrate or encapsulate multiple cloud translation calling information or part of the information;
further comprises:
a cost calculation and statistics module, used to calculate the cost of the uploaded information, content and data that calls cloud translation, and further subtract the calculated cost from the user's fund balance;
wherein, the server includes a communication interface module, specifically comprising:
a cloud translation calling information request download interface, used for receiving a cloud translation calling information request sent by the client or terminal or user, and returning the corresponding cloud translation calling information or part of the information if the authentication is successful;
a cloud translation calling data and fee uploading interface used for: receiving the successfully called cloud translation information, data and fees sent by the client or terminal or the user, and performing information and data storage or recording operations and fee deduction operations after receiving the information, data and fees;
a user fund information downloading interface, used for: sending the user's fund balance and recharge amount recorded on the server to the client or terminal or user;
a cloud translation module downloading interface, used to download the cloud translation module or cloud translation interface sub-module;
the server that calls the cloud translation service according to the request further comprises:
decision-making module; setting module; billing module; recording and storaging module.

9. A system for calling cloud translation, wherein, comprising:
a server or server end, wherein, the server or server end is used to provide cloud translation calling information or part of the information; or, the server or server end calls the cloud translation service according to a request; and
at least one client or terminal, wherein: the client or terminal calls the cloud translation service according to the cloud translation calling information or part of the information provided by the server or the server end, or the client or terminal further includes a cloud translation module, and the cloud translation module calls the cloud translation service according to the cloud translation calling information or part of the information provided by server or server end.

10. The system for calling cloud translation according to claim 9, wherein,
said client or terminal is a device according to claims 3 to 4; said server or server is a server according to claims 7 to 8;
wherein, the cloud translation calling information or part of the information is obtained by the user online and input to the client, or provided to the user by email or text message, or downloaded by the client or terminal; further wherein, the client or terminal directly calls multiple cloud translation services at the same time; further, the server also provides related services; wherein, the server or server provides the cloud translation calling information, the account information, fund information or part of the information to one or more clients or terminals, or one or more users; further receiving and storing the data and information for calling the cloud translation uploaded by the one or more clients or terminals or one or more users; further, the server stores the account information of the client or terminal or user, and provides the client or terminal or user with the cloud translation calling information, the account information, the fund information or part of the information according to the account information; further, the cloud translation module includes a cloud translation interface sub-module, and the cloud translation interface sub-module calls the cloud translation service according to the cloud translation calling information or part of the information provided by the server or server; wherein, the cloud translation calling information comprises basic information, and further comprises additional information; wherein, the basic information includes information for calling cloud translation from a cloud translation provider, and the additional information includes information for management; further, the additional information includes fund information or fund balance information of a client or terminal or user; wherein, the basic information includes a unit price of cloud translation, which is used to charge for calling cloud translation; wherein, the client or terminal charges for calling cloud translation on a per-time basis or in batches; further, the client or terminal subtracts the amount of the billing result from the user's fund balance; wherein, the calling cloud translation is billed on a per-time basis or in batches; further, the server subtracts the amount of the charging result from the user's fund balance.
